(19) Europäisches Patentamt / European Patent Office / Office européen des brevets

(11) **EP 4 397 911 A1**

(12) **EUROPEAN PATENT APPLICATION**
published in accordance with Art. 153(4) EPC

(43) Date of publication:
**10.07.2024  Bulletin 2024/28**

(21) Application number: **22864509.9**

(22) Date of filing: **29.08.2022**

(51) International Patent Classification (IPC):
**F24C 15/10** (2006.01)     **H05B 6/12** (2006.01)

(52) Cooperative Patent Classification (CPC):
**F24C 15/10; H05B 6/12**

(86) International application number:
**PCT/JP2022/032448**

(87) International publication number:
**WO 2023/032927 (09.03.2023 Gazette 2023/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.08.2021  JP 2021140187**

(71) Applicant: **Panasonic Intellectual Property Management Co., Ltd.**
**Kadoma-shi, Osaka 571-0057 (JP)**

(72) Inventors:
• **HIRAI, Chie**
  **Kadoma-shi, Osaka 571-0057 (JP)**
• **IWASAKI, Yuki**
  **Kadoma-shi, Osaka 571-0057 (JP)**
• **FUKUDA, Hiroshi**
  **Kadoma-shi, Osaka 571-0057 (JP)**
• **ZUKAWA, Takehiro**
  **Kadoma-shi, Osaka 571-0057 (JP)**

(74) Representative: **SSM Sandmair**
**Patentanwälte Rechtsanwalt**
**Partnerschaft mbB**
**Joseph-Wild-Straße 20**
**81829 München (DE)**

(54) **TOP PLATE FOR HEAT COOKER**

(57) A cooking device top plate comprising: a crystallized glass substrate containing $Li_2O$-$Al_2O_3$-$SiO_2$ as a main component and a transition element; a substrate color improving layer provided on a lower surface of the crystallized glass substrate, the substrate color improving layer containing a blue pigment and including one or more brightness enhancing layers containing voids and having a refractive index smaller than that of the crystallized glass substrate or not less than (a refractive index of the crystallized glass substrate + 0.1); and a strength enhancing member.

[FIG.2]

EP 4 397 911 A1

**Description**

TECHNICAL FIELD

The present invention relates to a cooking device top plate.

BACKGROUND ART

Transparent heat-resistant glass is used as a base for a cooking device top plate such as an electromagnetic induction cooking device or a thermoelectric cooking device that heats with infrared rays emitted from a heating element. By providing a light shielding colored layer on the lower surface of the heat-resistant glass substrate, that is, on a surface opposite to the cooking surface of the heat-resistant glass substrate, a cooking device having a color tone that meets the needs of customers is achieved.

Conventionally, as the heat-resistant glass substrate, a quartz glass substrate, a borosilicate glass substrate, or a crystallized glass substrate or the like is used. In recent years, a crystallized glass substrate having high strength and a suppressed thermal expansion coefficient is often used.

As a top plate including the crystallized glass substrate, for example, an electromagnetic cooking device glass top plate having enhanced designability without losing the original strength of substrate glass has been proposed. For example, Patent Literature 1 discloses an electromagnetic cooking device glass top plate. In the electromagnetic cooking device glass top plate, one or a plurality of layers of matte decorative glass made of a glass composition are laminated on the back surface of substrate glass made of transparent low-expansion glass. Furthermore, one or a plurality of layers of a glossy layer or a light shielding layer are laminated on the laminated product. The linear thermal expansion coefficient of the substrate glass and the linear thermal expansion coefficient of the matte decorative glass are specified. Patent Literature 2 discloses a cooking device glass top plate. In the cooking device glass top plate, a highly reflective film containing one or more of $TiO_2$, $CeO_2$, and $ZrO_2$ as a main component and having a thickness of 20 to 300 nm is laminated on a back surface that is a surface opposite to the cooking surface of substrate glass made of transparent low-expansion glass. A pearl-like layer containing a pearl-like material is laminated on the highly reflective film. Furthermore, a light shielding layer is laminated on the pearl-like layer.

Furthermore, Patent Literature 3 discloses a cooking device glass top plate that achieves both texture and visibility of display. In the cooking device glass top plate, a light shielding portion and a translucent display portion are provided on substrate glass. A display is disposed below the display portion. The substrate glass has a cooking surface formed of a smooth surface and a back surface formed of a roughened surface. The light shielding portion is provided by laminating a light shielding layer on the back surface of the substrate glass. The display portion is provided by bonding a translucent plate to the back surface of the substrate glass with a transparent intermediate layer interposed therebetween. Furthermore, the translucent plate has a smooth exposed surface at least not facing the transparent intermediate layer.

Patent Literature 4 discloses a cooking device top plate having excellent aesthetic appearance. The cooking device top plate includes a transparent crystallized glass substrate containing titanium oxide, a reflective film formed on the back surface of the transparent crystallized glass substrate and reflecting light in at least a part of a visible wavelength range, and a color tone correction film disposed between the transparent crystallized glass substrate and the reflective film and having a light transmittance gradually decreasing as a wavelength increases in the visible wavelength range. The reflective film and the color tone correction film are configured such that an average light reflectance at an interface between the color tone correction film and the transparent crystallized glass substrate is lower than an average light reflectance at an interface between the color tone correction film and the reflective film in the visible wavelength range.

Patent Literature 5 discloses a cooking device top plate that is used as a top plate of a cooking device provided with an electromagnetic induction heating device and includes a low-expansion transparent crystallized glass plate. In the cooking device top plate, a decorative layer including a dense inorganic pigment layer is formed on a part or the whole of the cooking surface side of the low-expansion transparent crystallized glass plate, and a light shielding layer including a porous inorganic pigment layer is formed on a part or the whole of a heating device side. Patent Literature 6 discloses a light shielding glass plate. In the light shielding glass plate, a porous light shielding layer containing 40 to 90% by weight of an inorganic pigment powder and 10 to 60% by weight of a glass flux is provided on the surface of a glass plate made of transparent low-expansion crystallized glass. The adjacent inorganic pigment powders, or the inorganic pigment powder and the glass plate are bonded to each other by glass formed by melting and solidifying the glass flux.

Patent Literature 7 discloses a method for producing a glass or glass-ceramic product including a decorative layer. The method includes: mixing at least one decorative pigment with a sol-gel binder, and curing the pigment mixed with the sol-gel binder on the glass or glass-ceramic substrate of the product by annealing to form a decorative layer having a porous ceramic-like structure.

Patent Literature 8 proposes, as a glass-ceramic plate or a glass plate with reinforced mechanical strength. The glass-ceramic plate or the glass plate includes a glass-ceramic or glass substrate in the form of a plate having two substantially parallel main surfaces, and at least one layer containing at least one high-temperature resistance (co)polymer, or a porous silica-based inorganic matrix, which is fixed to at least one of the two main surfaces. The glass-ceramic or glass substrate has a thickness of less than 4 mm.

PRIOR ART DOCUMENT

PATENT LITERATURES

Patent Literature 1: JP 2008-16318 A
Patent Literature 2: JP 2008-215651 A
Patent Literature 3: JP 2008-267633 A
Patent Literature 4: JP 2011-208820 A
Patent Literature 5: JP 2003-168548 A
Patent Literature 6: JP Hei 10-273342 A
Patent Literature 7: JP 2008-536791 A
Patent Literature 8: JP 2007-530405 A

SUMMARY OF INVENTION

PROBLEMS TO BE SOLVED BY THE INVENTION

The crystallized glass has excellent strength characteristics, but the glass itself exhibits yellowness. This crystallized glass contains $Li_2O$-$Al_2O_3$-$SiO_2$ as a main component, and a transition element such as Ti or Zr added for crystallization. This transition element is said to cause the yellowness. When a colored layer provided on the lower surface of the crystallized glass substrate has a dark color tone, there is almost no problem even if the crystallized glass substrate exhibits yellowness. However, as customer needs, a white cooking device top plate may be required. When conventional borosilicate glass is used for a substrate, a white cooking device top plate can be achieved by providing a white colored layer on the lower surface of the substrate. However, even if a colored layer is white when crystallized glass is used as a substrate, a color tone visually recognized through the crystallized glass substrate exhibits yellowness, which makes it difficult to achieve the white cooking device top plate.

Patent Literatures 1 to 3 and 5 enhance texture such as a matte tone or metallic luster as a design property, and in particular, it is not an object thereof to achieve the white cooking device top plate. Patent Literature 4 discloses the cooking device top plate having excellent aesthetic appearance, but it is not an object thereof to achieve the white cooking device top plate that is particularly difficult. Furthermore, Patent Literatures 6 to 8 particularly enhance the mechanical strength of the cooking device top plate, and in particular, it is not an object thereof to achieve the white cooking device top plate.

The present invention has been made to solve the above problems, and an object of the present invention is to provide a cooking device top plate that contains crystallized glass exhibiting high strength and low-thermal expansibility as a substrate, and exhibits white.

SOLUTIONS TO THE PROBLEMS

According to one gist of the present invention, there is provided a cooking device top plate comprising: a crystallized glass substrate containing $Li_2O$-$Al_2O_3$-$SiO_2$ as a main component and a transition element; a substrate color improving layer provided on a lower surface of the crystallized glass substrate, the substrate color improving layer containing a blue pigment and including one or more brightness enhancing layers containing voids and having a refractive index smaller than that of the crystallized glass substrate or not less than (a refractive index of the crystallized glass substrate + 0.1); and a strength enhancing member.

EFFECTS OF THE INVENTION

The present invention makes it possible to provide a heat cooking device top plate that has high durability since the cooking device top plate contains crystallized glass exhibiting high strength and low-thermal expansibility as a substrate, and exhibits white.

BRIEF DESCRIPTION OF THE DRAWINGS

Fig. 1 is a schematic cross-sectional view of a preliminary experiment sample.
Fig. 2 is a schematic cross-sectional view of a cooking device top plate shown as an embodiment of the present invention.
Fig. 3 is a graph showing another preliminary experiment results.
Fig. 4A is a schematic cross-sectional view of another preliminary experiment sample (without an air layer).
Fig. 4B is a schematic cross-sectional view of another preliminary experiment sample (with an air layer).
Fig. 5 is a schematic cross-sectional view of a cooking device top plate shown as another embodiment of the present invention.
Fig. 6 is a schematic cross-sectional view of a cooking device top plate shown as another embodiment of the present invention.
Fig. 7 is a schematic cross-sectional view of a cooking device top plate shown as another embodiment of the present invention.
Fig. 8 is a schematic cross-sectional view of a cooking device top plate shown as another embodiment of the present invention.
Fig. 9 is a schematic cross-sectional view of a cooking device top plate shown as another embodiment of the present invention.
Fig. 10 is a schematic cross-sectional view of a cooking device top plate shown as another embodiment of the present invention.
Fig. 11 is a schematic cross-sectional view of a cooking device top plate shown as another embodiment of the present invention.
Fig. 12 is a graph showing preliminary experiment results.
Fig. 13 is a schematic cross-sectional view of a cooking device top plate shown as another embodiment of the present invention.
Fig. 14 is a schematic cross-sectional view of a cooking device top plate shown as another embodiment of the present invention.
Fig. 15 is a schematic cross-sectional view of a cooking device top plate shown as another embodiment of the present invention.
Fig. 16 is a schematic cross-sectional view of a cooking device top plate shown as another embodiment of the present invention.
Fig. 17 is a schematic cross-sectional view of a cooking device top plate shown as another embodiment of the present invention.
Fig. 18 is a schematic cross-sectional view of a cooking device top plate shown as another embodiment of the present invention.
Fig. 19 is a schematic cross-sectional view of a cooking device top plate shown as another embodiment of the present invention.

DETAILED DESCRIPTION

On the premise that crystallized glass exhibiting high strength and low-thermal expansibility and containing $Li_2O\text{-}Al_2O_3\text{-}SiO_2$ as a main component and a transition element, is used as a substrate, the present inventors have intensively studied to achieve a white cooking device top plate having a color tone close to that when a white coating material is applied to a conventional borosilicate glass substrate. As a result, the present inventors have found that the cooking device top plate may include: a crystallized glass substrate containing $Li_2O\text{-}Al_2O_3\text{-}SiO_2$ as a main component and a transition element; a substrate color improving layer provided on a lower surface of the crystallized glass substrate, the substrate color improving layer containing a blue pigment and including one or more brightness enhancing layers containing voids and having a refractive index smaller than that of the crystallized glass substrate or not less than (a refractive index of the crystallized glass substrate + 0.1); and a strength enhancing member, and have arrived at the present invention.

Hereinafter, embodiments of the present invention will be described with reference to the drawings, including the circumstances that have arrived at the present invention. The present invention is not limited by the embodiments.

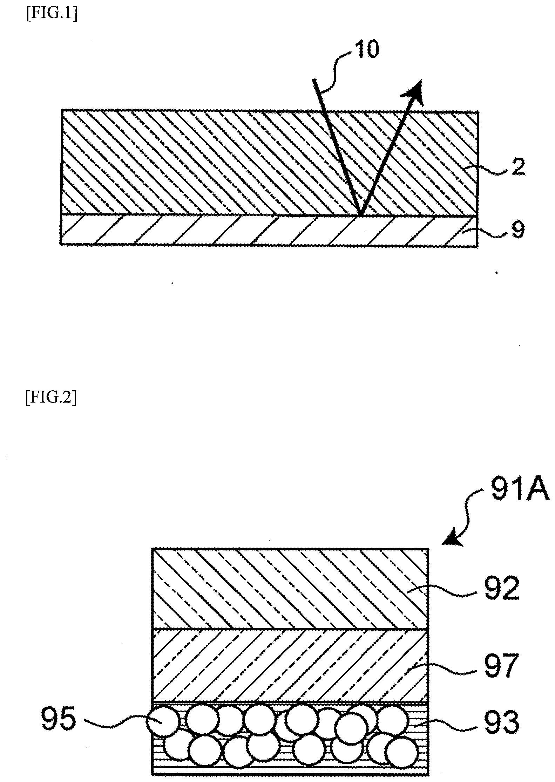

First, in order to study means for correcting a color tone from yellowness to white, as shown in Fig. 1, the present inventors have prepared a preliminary experiment sample, and have confirmed the color tone of the preliminary experiment sample. In the preliminary experiment sample, a colored layer 9 in which a blue pigment as a complementary color of the yellowness is blended in an amount of 10% by volume in the colored layer is provided on the lower surface (back surface) of a crystallized glass substrate 2. In Fig. 1, reflected light 10 indicates light reflected at an interface between the crystallized glass substrate 2 and the colored layer 9. The yellowness was suppressed by the configuration of Fig. 1, but the reflected light 10 was weak, and the brightness of the colored layer decreased, which accordingly exhibited gray.

The present inventors have further studied for the purpose of enhancing the strength of the cooking device top plate while correcting the color tone from the yellowness to the white. As a result, as described above, as shown in Fig. 2, the present inventors have found that the cooking device top plate includes:

- a crystallized glass substrate 92 containing $Li_2O-Al_2O_3-SiO_2$ as a main component and a transition element;
- a substrate color improving layer provided on a lower surface of the crystallized glass substrate, the substrate color improving layer containing a blue pigment and including one or more brightness enhancing layers containing voids and having a refractive index smaller than that of the crystallized glass substrate or not less than (a refractive index of the crystallized glass substrate + 0.1) (Fig. 2 shows a brightness enhancing layer 93 containing hollow glass 95); and
- a strength enhancing member (Fig. 2 shows an adhesion enhancing layer 97 to be described later). Hereinafter, the substrate color improving layer, the strength enhancing member, and the crystallized glass substrate constituting the cooking device top plate according to the present embodiment will be first described.

[Substrate Color Improving Layer]

The substrate color improving layer is provided on a lower surface of the crystallized glass substrate. The substrate color improving layer contains a blue pigment and includes one or more brightness enhancing layers containing voids and having a refractive index smaller than that of the crystallized glass substrate or (a refractive index of the crystallized glass substrate + 0.1) or more. The brightness enhancing layer and the blue pigment contained in the substrate color improving layer will be described.

(Brightness Enhancing Layer)

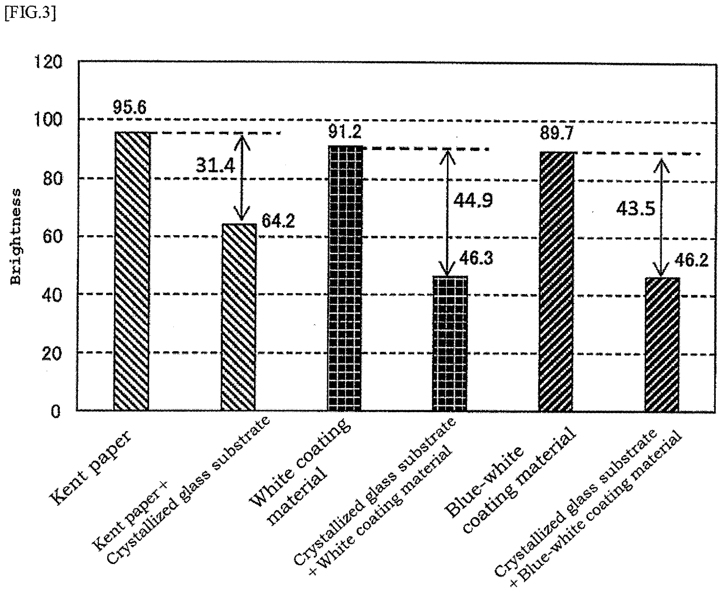

The substrate color improving layer includes the brightness enhancing layer. In studying the configuration of the brightness enhancing layer, first, the following experiment was performed as a preliminary experiment. The brightness of Kent paper and the brightness when a crystallized glass substrate (Neoceram N-0) was placed on the Kent paper were measured, and a difference between the brightnesses was determined. A sample in which a white layer was formed by printing a white coating material (Jujo Chemical Co., Ltd. (white)) on the lower surface (back surface) of a crystallized glass substrate (Neoceram N-0), and a sample in which a blue-white layer was formed by printing a coating material containing a blue pigment (Jujo Chemical Co., Ltd. (white 100: blue 2)) on the lower surface of a crystallized glass substrate (Neoceram N-0) were prepared. The brightnesses of the lower surface (back surface) and the front surface of each of the samples were measured. The results are shown in Fig. 3.

The following was found from Fig. 3. That is, the brightness when the crystallized glass substrate (Neoceram N-0) was placed on the white paper (Kent paper) decreased by 31.4 from the brightness of only the Kent paper. In contrast, the brightness when the white coating material was directly printed on the lower surface of the crystallized glass substrate decreased by 44.9 from the brightness of only the white coating material. The brightness when the blue-white coating material was directly printed on the lower surface of the crystallized glass substrate also decreased by 43.5 from the brightness of only the blue-white coating material. From these experiment results, it is considered that when the crystallized glass substrate (Neoseram N-0) is placed on the Kent paper, an air layer is present between the Kent paper and the crystallized glass substrate (Neoseram N-0), whereby the air layer provides higher brightness than that when the coating material is directly printed on the crystallized glass substrate. From this result, the present inventors have found that it is effective to provide the air layer or a layer capable of improving brightness as with the air layer between the crystallized glass substrate and the color tone adjusting layer.

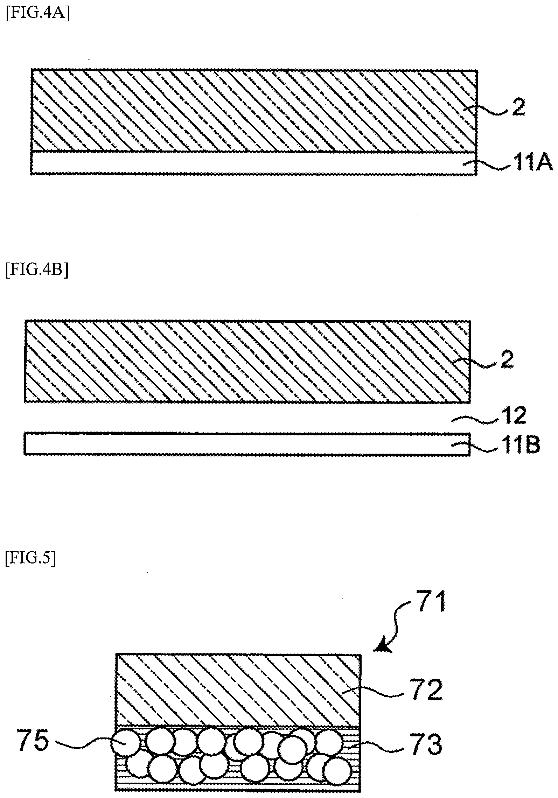

Furthermore, as a result of studying the difference in brightness due to the difference in the presence or absence of the air layer, as shown in Fig. 4A, when a white colored layer 11A was formed by directly printing a coating material on a crystallized glass substrate (Neoceram N-0) 2, the refractive indexes of the crystallized glass substrate 2 and the white colored layer 11A were almost the same or close to each other: the refractive index of the crystallized glass substrate 2 was 1.54, and the refractive index of the white colored layer 11A was about 1.5 to 1.6. Meanwhile, as shown in Fig. 4B, when the crystallized glass substrate (Neoseram N-0) 2 was placed on white paper (Kent paper) 11B, a thin air layer 12 was present between the white paper (Kent paper) 11B and the crystallized glass substrate 2, and the refractive index of the air layer 12 was 1.0. The difference from the refractive index of the crystallized glass substrate 2 was larger than that in the case of Fig. 4A. The present inventors have found that the provision of the difference in refractive index from the crystallized glass substrate 2 so as to approach the refractive index of the air layer 12, and a large difference in refractive index from the crystallized glass substrate 2 contribute to improvement in brightness, and has found that a brightness enhancing layer having a controlled refractive index is provided.

As described above, the refractive index of the brightness enhancing layer is smaller than that of the crystallized glass substrate or not less than (the refractive index of the crystallized glass substrate + 0.1). As a result, the reflectance at the interface between the crystallized glass substrate 2 and the brightness enhancing layer 3 can be enhanced as compared with reflected light in the configuration of Fig. 1, whereby the brightness can be enhanced. As a result, the color tone can be brought close to white, that is, a color tone when a white coating material is applied to borosilicate glass. The refractive index of the brightness enhancing layer can be set to, for example, (the refractive index of the crystallized glass substrate + 0.3) or more, (the refractive index of the crystallized glass substrate + 0.4) or more, or (the refractive index of the crystallized glass substrate + 0.5) or more. The brightness enhancing layer preferably has a refractive index smaller than that of the crystallized glass substrate. It is considered that, as the refractive index of the brightness enhancing layer is smaller than that of the crystallized glass substrate and preferably closer to the refractive index of 1.0 of an air layer, blue light that enters the crystallized glass substrate, and is totally reflected in the crystallized glass substrate to be less likely to be extracted is likely to be extracted to the outside of the crystallized glass substrate, whereby the blue light totally reflected in the crystallized glass substrate can be reduced. As a result, it is considered that the brightness of the cooking device top plate can be further enhanced, and the yellowness can be suppressed to increase the whiteness.

The difference between the refractive index of the brightness enhancing layer and the refractive index of the crystallized glass substrate is a value represented by an absolute value, and includes both cases of "refractive index of brightness enhancing layer > refractive index of crystallized glass substrate" and "refractive index of brightness enhancing layer < refractive index of crystallized glass substrate".

When the difference in refractive index between the brightness enhancing layer and the crystallized glass substrate is too large, the amount of light transmitted through the brightness enhancing layer tends to be small. For example, when the color tone adjusting layer is provided on the lower surface of the brightness enhancing layer, the amount of light reaching the color tone adjusting layer decreases, and therefore a color correction effect provided by the color tone adjusting layer tends to decrease. When the color of the color tone adjusting layer is darkened to enhance the color correction effect provided by the color tone adjusting layer, the brightness tends to be rather easily lowered. From these viewpoints, when the light reflectance at the interface between the brightness enhancing layer and the color tone adjusting layer is preferably suppressed to 20% or less, the difference in refractive index between the brightness enhancing layer and the crystallized glass substrate is preferably 1.0 or less.

In the present embodiment, the refractive index of the brightness enhancing layer is preferably smaller than that of the crystallized glass substrate as described above. When the refractive index of the brightness enhancing layer is smaller than that of the crystallized glass substrate, the refractive index of the brightness enhancing layer is more preferably smaller than that of the crystallized glass substrate by 0.1 or more, and still more preferably smaller than that of the crystallized glass substrate by 0.3 or more. The refractive index of the brightness enhancing layer is most preferably 1.0 which is the same as the refractive index of the air layer.

When the brightness enhancing layer is made of a uniform material, the refractive index of the brightness enhancing layer can be obtained using an Abbe refractometer or a spectroscopic ellipsometer. When the brightness enhancing layer has voids as described later, the refractive index of the brightness enhancing layer can be obtained as follows. That is, a refractive index $n_2$ of the brightness enhancing layer can be obtained from the following equation using a refractive index $n_1$ of a bulk material such as a hollow material for forming voids, obtained by the Abbe refractometer or the spectroscopic ellipsometer and a void ratio $\varphi_1$ obtained by observing the cross section of the brightness enhancing layer containing voids with an electron microscope.

$$n_2 = n_1 \times (1 - \varphi_1)$$

The brightness enhancing layer may satisfy the definition of the refractive index. Examples of the material for forming the brightness enhancing layer include an inorganic coating material containing an inorganic material such as a glass component and a solvent as main components, and an organic coating material containing an organic resin and a solvent as main components. Examples of the organic resin contained in the organic coating material include a silicone resin, a modified silicone resin such as an acrylic-modified silicone resin, and a urethane-based resin, and a silicone resin is preferable from the viewpoint of securing heat resistance. When the brightness enhancing layer contains, for example, a pigment such as a blue pigment as described later, an inorganic pigment such as a blue inorganic pigment may be contained in the inorganic coating material or the organic coating material.

As means for achieving the refractive index of the brightness enhancing layer, one or more brightness enhancing layers containing voids are provided. That is, the brightness enhancing layer is formed of the void-containing layer, or the brightness enhancing layer includes the void-containing layer. The brightness enhancing layer includes the void-containing layer, and therefore the refractive index of the brightness enhancing layer is easily made smaller than that of the crystallized glass substrate. The inclusion of the voids can be confirmed, for example, by observing the cross section (scanning electron microscope (SEM) image or the like). When the volume ratio of the voids is preferably 10% or more in the brightness enhancing layer, the refractive index can be easily achieved. The ratio is more preferably 30% or more, still more preferably 50% or more, and still more preferably more than 60%. Meanwhile, from the viewpoint of securing the strength of the cooking device top plate, the ratio can be preferably 90% or less. The ratio is more preferably 60% or less from the viewpoint of securing the strength.

The brightness enhancing layer may be

- a void-containing layer containing one or more selected from the group consisting of hollow particles, a porous material, and a structure having voids between particles, or
- a void-containing layer in which irregularities are formed on a lower surface of the crystallized glass substrate so that voids can be secured. When the substrate color improving layer includes the color tone adjusting layer, the brightness enhancing layer may be a void-containing layer in which a spacer is provided between the crystallized glass substrate and the color tone adjusting layer so that voids can be secured, or a void-containing layer in which irregularities are formed on the upper surface of the color tone adjusting layer so that voids can be secured.

The void-containing layer may contain a large number of hollow particles or particles formed of a porous material (porous particles) as particles having voids. The structure having voids between the particles is a structure having voids between the particles formed when a plurality of solid particles/hollow particles overlap each other. Specifically, the structure having voids between the particles can be formed, for example, by binding a contact point or the like of particles with a binder without filling a space between the particles with the binder when forming the brightness enhancing layer using the binder with, for example, glass particles, ceramic particles, or silica particles or the like as solid particles. According to this structure, the structure having voids can be formed without using hollow particles. In this case, the particles are not hollow, and therefore the strength of a coating film can be increased. The average particle diameter of the solid particles is, for example, 10 nm to 100 $\mu$m. The material of the glass particles is not particularly limited, and examples thereof include crystallized glass particles, borosilicate glass particles, and soda glass particles.

Examples of the particles having voids include laminated hollow particles such as spherical bodies and cylindrical bodies. The hollow particles may be sealed or unsealed. In the case of the sealing, the pressure in the voids may be atmospheric pressure or close to vacuum. Examples of the hollow particles include hollow ceramics such as hollow glass, glass beads, hollow alumina, and hollow silica, and hollow polymer particles. Examples of the hollow polymer include those formed of, for example, a silicone resin having excellent heat resistance. The hollow particles are preferably transparent, and may be colorless and transparent, or colored and transparent as long as the effects of the present embodiment are not impaired. Examples of the particles having voids include particles having an average particle diameter of, for example, 10 nm to 100 $\mu$m as expressed by a median diameter (d50).

The ratio of the particles having voids in the brightness enhancing layer may satisfy the ratio of the voids in the brightness enhancing layer, and is not particularly limited. The volume ratio of the particles having voids in the brightness enhancing layer can be set to, for example, 10 to 99%.

As the hollow particles, hollow glass is preferable. As the hollow glass, for example, a commercially available product can be used. Examples of the commercially available product include glass bubbles manufactured by 3M Company, hollow glass manufactured by Potters Barotini Co., Ltd., CellSpheres manufactured by Taiheiyo Cement Corporation, and SiliNax (registered trademark) manufactured by Nittetsu Mining Co., Ltd.

Examples of the porous material include porous particles such as porous glass particles and porous ceramic particles. Instead of using the porous particles, a mixed material containing a porosity-forming glass material, a ceramic material, and a polymer material that foams at a high temperature, for example, may be applied onto a crystallized glass substrate, followed by, for example, firing to cause the polymer material to foam, thereby forming porosity.

The porous material is not limited to the material having cavities, and may be, for example, one in which voids are formed by the aggregation of fibers made of glass and ceramic and the like. Examples of the aggregate of the glass fibers include flocculent glass wool.

When the particles such as the hollow particles are used, the void-containing layer (brightness enhancing layer) may contain a powdered glass-containing glass paste or a transparent ink as a binder for adhesion between the particles. The volume ratio of the binder contained in the brightness enhancing layer can be, for example, within a range of 0.1% or more and 90% or less, and within a range of 0.5% or more and 10% or less in the brightness enhancing layer. Examples of the binder include a glass paste manufactured by Nippon Electric Glass Co., Ltd., a glass frit and a glass paste manufactured by AGC Inc., and a heat-resistant clear ink manufactured by Teikoku Printing Inks Mfg. Co., Ltd.

Examples in which the brightness enhancing layer is formed using the hollow particles include a cooking device top plate 71 having a configuration in which a crystallized glass substrate 72 and a layer containing a large number of hollow glasses 75 and a blue pigment as a brightness enhancing layer 73 are laminated, as shown in Fig. 5. Although not shown in Fig. 5, for example, a light shielding layer or the like may be formed on the lower surface of the brightness enhancing layer 73. In Figs. 5 to 11 and 13 to 19, the purpose is to describe the form of the brightness enhancing layer and the like, and the strength enhancing member is not illustrated.

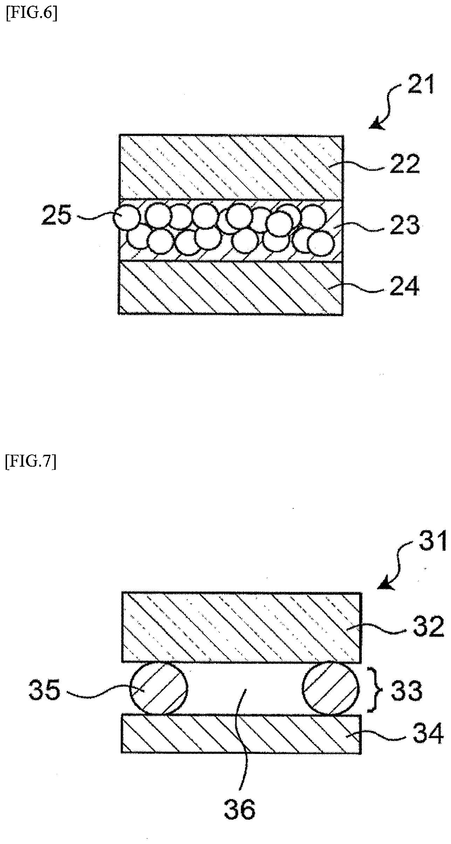

Examples in which the brightness enhancing layer is formed using the hollow particles, in the case of having a color tone adjusting layer described below, include a cooking device top plate 21 including a crystallized glass substrate 22, a layer containing hollow glass 25 as a brightness enhancing layer 23, and a white pigment layer as a color tone adjusting layer 24, as shown in Fig. 6. As the brightness enhancing layer 23, a layer containing one or more of the above-described porous ceramic particles, glass wool, and glass fiber may be formed in place of the hollow glass-containing layer. A layer containing hollow glass, and one or more of porous ceramic particles, glass wool, and glass fiber may be formed. Although not shown in Fig. 6, for example, a light shielding layer to be described later or the like may be formed on the lower surface of the color tone adjusting layer 24.

When the cooking device top plate includes a color tone adjusting layer to be described later, the void-containing layer may be formed by providing a spacer between the crystallized glass substrate and the color tone adjusting layer to form a hollow layer. As shown in Fig. 7, examples thereof include a cooking device top plate 31 including a crystallized glass substrate 32, a light blue glass coating material layer as a color tone adjusting layer 34, and a brightness enhancing layer 33 in which a hollow layer 36 is formed by providing a spacer 35 between the crystallized glass substrate 32 and the color tone adjusting layer 34. The size and disposing of the spacer are not particularly limited as long as the ratio of the voids is satisfied. Examples of the material of the spacer include glass and ceramic. The spacer is preferably transparent. Although not shown in Fig. 7, a second glass substrate or the like to be described later may be formed on the lower surface of the color tone adjusting layer 34 for the purpose of further enhancing the mechanical strength, for example.

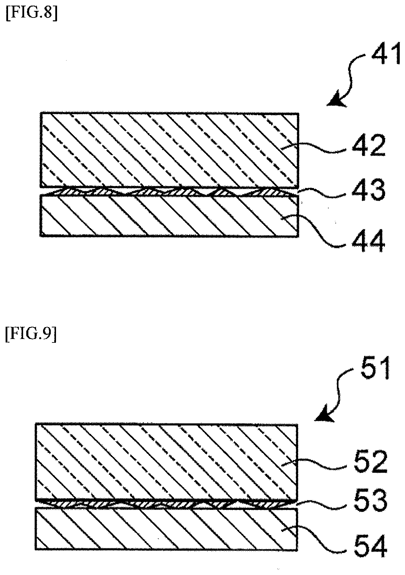

When the cooking device top plate includes a color tone adjusting layer to be described later, the void-containing layer may be an irregularity region provided on the lower surface of the crystallized glass substrate or the upper surface of the color tone adjusting layer. For example, from the viewpoint of enhancing the brightness, it is also considered to provide an embodiment in which the lower surface of the crystallized glass substrate 2 is sufficiently roughened to form an irregularity region as a brightness enhancing layer (void-containing layer), and a color tone adjusting layer is provided on the roughened surface. As shown in Fig. 8, examples thereof include a cooking device top plate 41 including a crystallized glass substrate 42, a light blue glass coating material layer formed as a color tone adjusting layer 44, and a brightness enhancing layer 43 formed by providing irregularities on the upper surface of the color tone adjusting layer 44 between the crystallized glass substrate 42 and the color tone adjusting layer 44. Although not shown in Fig. 8, a second glass substrate or the like to be described later may be formed on the lower surface of the color tone adjusting layer 44 for the purpose of further enhancing the mechanical strength, for example.

As shown in Fig. 9, other examples of the embodiment include a cooking device top plate 51 including a crystallized glass substrate 52 having irregularities on a surface thereof, a light blue glass coating layer as a color tone adjusting layer 54, and a brightness enhancing layer 53 between the crystallized glass substrate 52 and the color tone adjusting layer 54 when the cooking device top plate 51 includes a color tone adjusting layer to be described later. Although not shown in Fig. 9, a second glass substrate or the like to be described later may be formed on the lower surface of the color tone adjusting layer 54 for the purpose of further enhancing the mechanical strength, for example.

The degree of the irregularities is not particularly limited as long as voids are preferably formed so as to satisfy the ratio of the voids, and the range of Ra is not particularly limited.

When the brightness enhancing layer is a void-containing layer formed by providing irregularities on the surface of the crystallized glass substrate or the color tone adjusting layer, the region of the brightness enhancing layer refers to a range of a maximum height (Rz) that is a sum of a maximum peak height (Rp) and a maximum valley depth (Rv) in the cross section of the crystallized glass substrate or the color tone adjusting layer provided with the irregularities.

The brightness enhancing layer preferably exhibits low-thermal expansibility as with the crystallized glass substrate in contact with the brightness enhancing layer. From these viewpoints, it is preferable that the brightness enhancing layer is formed of an inorganic coating material containing an inorganic material such as a glass component and a solvent as main components, and contains the glass component as a main component. For example, the brightness enhancing layer preferably has a component composition close to that of the crystallized glass substrate. For example, the brightness enhancing layer contains $Li_2O$-$Al_2O_3$-$SiO_2$ as a main component, and the component composition of the brightness enhancing layer is adjusted by changing the ratios of $SiO_2$, $Al_2O_3$, LizO, $TiO_2$, $ZrO_2$, $P_2O_5$, BaO, $Na_2O$+$K_2O$, and $As_2O_3$ and the like in a batch raw material in the composition of glass constituting the crystallized glass substrate.

When the brightness enhancing layer contains, for example, a large amount of hollow particles, porous particles, and glass particles and the like, the binder for binding them may be a material having a thermal expansion property close to the thermal expansion property of the particles. As the binder, for example, it is possible to use a glass-based binder containing one or more batch raw materials among $SiO_2$, $Al_2O_3$, $B_2O_3$, ZnO, $P_2O_5$, $Li_2O$, $Na_2O$+$K_2O$, $Bi_2O_3$, CaO, MgO, BaO, $TiO_2$, $ZrO_2$, and $SnO_2$ and the like. The oxidation number of the compound is not limited thereto.

In the present specification, for example, the phrase "containing $Li_2O$-$Al_2O_3$-$SiO_2$ as a main component" means that at least one of the following (a) and (b) is 50% by weight or more.

(a) the ratio of these oxides in the raw material of glass
(b) the ratio of a total oxide amount in the glass obtained by converting Li, Al, and Si in the glass into each single oxide

When the substrate color improving layer includes the color tone adjusting layer, the brightness enhancing layer only needs to be able to visually recognize the color tone adjusting layer. The brightness enhancing layer is preferably transparent or translucent from the viewpoint of visually recognizing the color tone adjusting layer. The translucence means that the transmittance of visible light is 20% or more and 80% or less. That is, the "transparency" of the brightness enhancing layer means that the transmittance of visible light is 20% or more.

In the present embodiment, it is particularly preferable that the brightness enhancing layer is a void-containing layer, contains a glass component as a main component, and is transparent or translucent.

The difference in refractive index from the crystallized glass substrate may be controlled by adjusting the thickness of the brightness enhancing layer. The thickness of the brightness enhancing layer is preferably 800 nm or more from the viewpoint of further enhancing a brightness enhancing effect. The thickness of the brightness enhancing layer is more preferably 1 $\mu$m or more. The thickness of the brightness enhancing layer can be, for example, 1 mm or less, for example, 500 $\mu$m or less, further for example, 100 $\mu$m or less, and further for example, 80 $\mu$m or less. For example, from the viewpoint of further suppressing the peeling and cracks and the like of the brightness enhancing layer, the thickness of the brightness enhancing layer can be, for example, 50 $\mu$m or less.

As an example of the method for forming the brightness enhancing layer, for example, an inorganic coating material such as a paste containing a glass composition is applied by screen printing or the like, dried, and then baked in a range of 550 to 900°C, for example, in a range of 700 to 900°C. As another example of the method for forming the brightness enhancing layer, when an organic coating material is applied, the organic coating material is dried, and then baked within a range of 250 to 400°C. For example, when the brightness enhancing layer and the color tone adjusting layer are formed of an inorganic material such as an inorganic coating material, baking is performed at, for example, 700 to 900°C at the time of forming the color tone adjusting layer after forming the brightness enhancing layer, so that the baking can be omitted at the time of forming the brightness enhancing layer.

When the void-containing layer is formed as the brightness enhancing layer, examples of a method for forming the void-containing layer include the following method. When particles such as hollow particles are used for forming the void-containing layer, for example, a paste containing the hollow particles and a binder is applied by screen printing or the like, dried, and then baked at the above temperature depending on the material to be used at the time of forming the brightness enhancing layer or the color tone adjusting layer.

When a foam material is used for forming the void-containing layer to form a porous layer, a mixed material containing a glass material, a ceramic material, and, for example, a polymer material that foams at a high temperature is applied onto a crystallized glass substrate by screen printing or the like, dried, and then baked at the above temperature depending on the material to be used at the time of forming the brightness enhancing layer or the color tone adjusting layer, whereby the polymer material can be caused to foam to form a porous brightness enhancing layer.

When spacers are used for forming the void-containing layer, the spacers are disposed on a crystallized glass substrate at desired intervals with an adhesive interposed therebetween, and a color tone adjusting layer is further laminated on the crystallized glass substrate with an adhesive interposed therebetween to provide a hollow layer as the brightness enhancing layer.

When irregularities are provided on the lower surface of the crystallized glass, the lower surface of the crystallized glass is roughened. Examples of the purpose of providing the irregularities on the lower surface of the crystallized glass include enhancement of a reflectance and formation of the void-containing layer. When the purpose is to increase the reflectance, for example, the roughening is performed such that the surface roughness (arithmetic average roughness) Ra of the lower surface of the crystallized glass substrate is 0.1 $\mu$m or more. Although the brightness is enhanced as the surface roughness Ra increases, in order to increase the reflectance, the surface roughness Ra is preferably small, for example, 10 $\mu$m or less from the viewpoint of setting Ra to a wavelength level size, that is, a size on the order of submicron, and from the viewpoint of maintaining the durability of the crystallized glass substrate against impact. Meanwhile, when the purpose is to form the void-containing layer, as described above, voids may be preferably formed so as to satisfy the ratio of the voids, and the range of Ra is not particularly limited.

The method of the roughening treatment is divided into a physical method and a chemical method. Examples of the physical method include sand blasting using silicon carbide (SiC), alumina ($Al_2O_3$), zirconia ($ZrO_2$), and diamond (C) and the like as a grind stone, and free abrasive polishing using a polishing agent. Examples of the chemical method include a method for immersing in an etching solution containing hydrofluoric acid.

When irregularities are provided on the upper surface of the color tone adjusting layer, the method is not particularly limited. For example, as described later, the color tone adjusting layer having irregularities is formed by using a second glass substrate for securing the mechanical strength, providing irregularities on the second glass substrate, and forming the color tone adjusting layer along the irregularities.

The substrate color improving layer may be formed of the brightness enhancing layer. That is, the substrate color improving layer may not include a color tone adjusting layer to be described later, and may be formed only of the brightness enhancing layer.

(Blue Pigment Contained in Substrate Color Improving Layer)

The substrate color improving layer contains the blue pigment. The cooking device top plate of the present embodiment may include the substrate color improving layer including the brightness enhancing layer having a controlled refractive index as described above and contain the blue pigment, and a specific aspect thereof is not limited. Therefore, the blue pigment may be contained in the brightness enhancing layer constituting the substrate color improving layer, or may be contained in a layer other than the brightness enhancing layer, constituting the substrate color improving layer. When a color tone adjusting layer to be described later is contained as a layer other than the brightness enhancing layer, only the brightness enhancing layer may contain a blue pigment, and the color tone adjusting layer may contain a pigment other than the blue pigment, for example, a white pigment. Alternatively, only the color tone adjusting layer may contain a blue pigment, and the brightness enhancing layer may contain a pigment other than the blue pigment, for example, a white pigment. Alternatively, the blue pigment may be contained in both the brightness enhancing layer and the color tone adjusting layer. When the blue pigment is contained in the brightness enhancing layer, the blue pigment can be contained within a range in which the transparency of the brightness enhancing layer can be maintained. When the blue pigment is contained in the brightness enhancing layer, the substrate color improving layer may be formed only of the brightness enhancing layer.

Examples of the blue pigment include a blue inorganic pigment, and examples of the blue inorganic pigment include blue inorganic pigments such as Prussian blue (ferric ferrocyanide), ultramarine blue, cobalt-based inorganic pigments (Co-Al-based, Co-Al-Si-based, Co-Zn-Si-based), V-Zr-Si-based inorganic pigments (turquoise blue), and manganese-based inorganic pigments. Examples of the white pigment include white inorganic pigments such as titanium oxide, cerium oxide, zinc oxide, and barium sulfate. Examples of commercially available products of the blue pigment and the white pigment include Hi-Color manufactured by Mitsuboshi Chemical Co., Ltd., XGL-HF screen ink manufactured by Teikoku Printing Inks Mfg. Co., Ltd., and decorative glass color HZ series manufactured by Okuno Chemical Industries Co., Ltd. Furthermore, in order to adjust the color tone, a red inorganic pigment such as iron oxide, iron hydroxide, or iron titanate may be contained as a red pigment. The coloring pigments can be mixed at an optional ratio so as to obtain a desired color tone. The pigments are not limited to those listed here.

The layer not containing a blue pigment may contain, for example, a white pigment. In this case, only a white pigment may be contained as the pigment, or a pigment other than white may be contained together with the white pigment.

[Strength Enhancing Member]

The cooking device top plate according to the present embodiment further includes a strength enhancing member. The strength enhancing member is a member necessary for enhancing the strength and durability of the cooking device top plate. The strength enhancement includes enhancing adhesion between the crystallized glass substrate and the substrate color improving layer or between adjacent layers, or enhancing the coating film strength of the substrate color improving layer such as the brightness enhancing layer. By providing the strength enhancing member, the strength of each of the layers constituting the cooking device top plate and the adhesion between the layers are enhanced, and as a result, the strength and durability of the entire cooking device top plate are enhanced. Furthermore, due to the enhancement in strength of each of the layers and the enhancement in adhesion between the layers, each of the layers is hardly peeled off even when the cooking device top plate is subjected to vibration or an external impact, and even when there is a difference in thermal expansion coefficient between the crystallized glass substrate and the brightness enhancing layer or the like, the adhesion between the layers is high and each of the layers is hardly peeled off. As a result, the durability and heat resistance of the cooking device top plate are enhanced. Furthermore, in a case where the brightness enhancing layer having a larger thickness is formed and heat is applied, thermal stress increases, and peeling easily occurs between the brightness enhancing layer and the crystallized glass substrate or another layer. However, such peeling hardly occurs by providing the strength enhancing member. Therefore, by forming the brightness enhancing layer to be thicker, the color tone can be more easily adjusted such that the brightness of the cooking device top plate can be further enhanced.

The strength enhancing member may be any member that can enhance the strength and durability of the cooking device top plate. As one of the forms, an adhesion enhancing layer is provided between the crystallized glass substrate and the substrate color improving layer constituting the cooking device top plate, an adhesion enhancing layer is provided between adjacent layers constituting the cooking device top plate, or a filler is contained in any layer constituting the cooking device top plate. Hereinafter, an aspect in which an adhesion enhancing layer is provided as a strength enhancing member and an aspect in which a filler is provided as a strength enhancing member will be described.

[Adhesion Enhancing Layer]

An adhesion enhancing layer as the strength enhancing member may be provided between the crystallized glass substrate and the substrate color improving layer, and/or a plurality of the brightness enhancing layers may be provided, and an adhesion enhancing layer as the strength enhancing member may be provided between one brightness enhancing layer and another brightness enhancing layer adjacent to the one brightness enhancing layer.

The adhesion enhancing layer is preferably one or more glass thin films or a void-containing layer having a different void ratio or/and material composition from that of the brightness enhancing layer. Examples of the material constituting the adhesion enhancing layer include glass materials whose main component is $Li_2O$-$Al_2O_3$-$SiO_2$ or the like. Alternatively, when the brightness enhancing layer is formed of hollow glass, glass beads, or a porous material or the like, a material close to the thermal expansion coefficient of the material such as the hollow glass constituting the brightness enhancing layer can be used as the material constituting the adhesion enhancing layer. Therefore, when the hollow glass contained in the brightness enhancing layer is, for example, a borosilicate glass type, a material having a thermal expansion coefficient larger than that of $Li_2O$-$Al_2O_3$-$SiO_2$ may be used for the adhesion enhancing layer. A material constituting the filler can also be used. The thickness of the adhesion enhancing layer is preferably equal to or smaller than that of the brightness enhancing layer. The adhesion enhancing layer may contain an additive such as an organic binder such as silicone.

When the void-containing layer is formed as the adhesion enhancing layer, the ratio of voids in the void-containing layer is preferably between the void ratio of one layer or substrate in contact with the adhesion enhancing layer and the void ratio of the other layer or substrate. For example, when the void-containing layer is provided as the adhesion enhancing layer between the crystallized glass substrate and the brightness enhancing layer having voids, the change in the void ratio is alleviated by forming the void-containing layer in which the ratio of voids is smaller than the void ratio of the brightness enhancing layer, so that delamination between the layers due to the influence of the difference in thermal expansion coefficient between the substrate and the brightness enhancing layer can be further reduced, and the film strength can be increased. Meanwhile, when the difference in thermal expansion between the crystallized glass substrate and the particles or the binder used in the brightness enhancing layer is large, stress relaxation is achieved by forming a void-containing layer having a void ratio larger than that of the brightness enhancing layer as the adhesion enhancing layer, and the strength can also be increased.

Examples of the method for forming the adhesion enhancing layer include applying a paste containing the glass or organic binder by screen printing or the like, drying the paste, and then baking the paste, or drying the paste, and then firing the paste together with a material for forming the brightness enhancing layer or the color tone adjusting layer at the time of forming the brightness enhancing layer or the color tone adjusting layer.

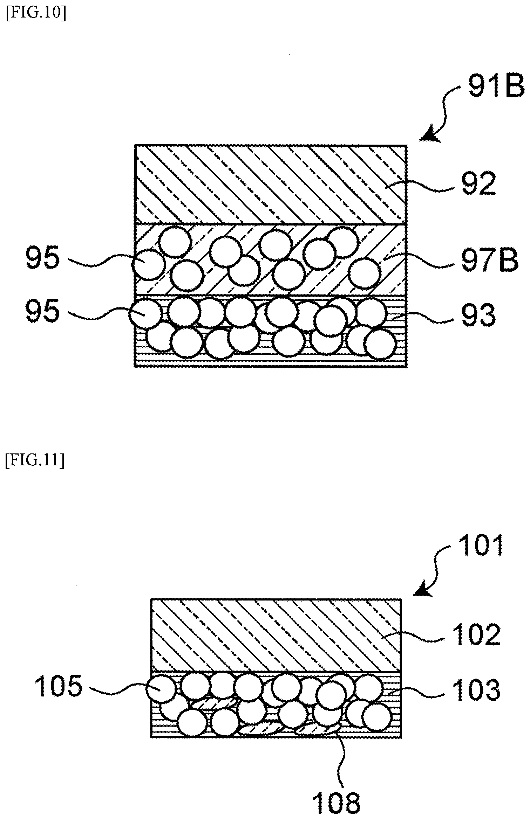

Examples of the cooking device top plate on which the adhesion enhancing layer is formed include a cooking device top plate shown in Fig. 10 in addition to a cooking device top plate 91A in Fig. 2 described above. An adhesion enhancing layer 97 of the cooking device top plate in Fig. 2 is a filling layer such as thin film glass, whereas an adhesion enhancing layer 97B of a cooking device top plate 91B in Fig. 10 is a layer having hollow glass 5. As shown in Fig. 10, the hollow glass is contained in the adhesion enhancing layer, and therefore adhesion between the crystallized glass substrate and the brightness enhancing layer can be enhanced, the strength of the entire cooking device top plate can be enhanced, and the whitening of the cooking device top plate can be easily achieved, which is preferable.

When a light shielding layer to be described later is provided on the lower surface of the substrate color improving layer, an adhesion enhancing layer may be provided as a strength enhancing member between the substrate color improving layer and the light shielding layer in order to sufficiently adhere the substrate color improving layer and the light shielding layer.

[Filler]

The substrate color improving layer may contain a filler as the strength enhancing member. The filler can be contained in one or more of a brightness enhancing layer constituting the substrate color improving layer and a layer other than a brightness enhancing layer such as a color tone adjusting layer constituting the substrate color improving layer. The brightness enhancing layer preferably contains a filler as the strength enhancing member.

The material, shape, size, and content of the filler are not particularly limited, and can be appropriately determined according to desired strength. The filler may be composed of one or more selected from the group consisting of a metal, a metal oxide, ceramic, a metal salt, glass, silica, mica, talc, clay, zeolite, an organic material, and a composite thereof, and a material having at least one of a coupling material, an active group, a reactive group, an organic substance, and a metal oxide is bonded, adsorbed, or deposited on the surface thereof. The filler that can be used may be a filler made of one or more materials selected from the group consisting of

- metals such as aluminum and titanium;
- metal oxides such as alumina, titania, zirconia, and zinc oxide;
- ceramics containing a metal oxide such as alumina;
- metal salts such as calcium carbonate and barium sulfate;
- glass, silica, mica, talc, clay, zeolite, an organic material; and
- a complex thereof;
 and
- a material having at least one of a coupling material, an active group, a reactive group, an organic substance, and a metal oxide bonded, adsorbed, or deposited on the surface thereof. The same material having a different shape or a different particle size or the like may be used together.

Examples of the shape of the filler include a spherical shape, a square shape, a rod shape, a branch shape, a needle shape, a thin plate shape, a scale shape, a fiber shape, a tetrapod shape, and a porous shape. The hollow particles may be used as long as the strength can be secured. The size of the filler is not particularly limited, and may be appropriately determined in consideration of the targeted strength of the layer. The size of the filler may be an average particle size of 10 nm to 100 $\mu$m. The average particle size is more preferably in the range of 100 nm to 50 $\mu$m. When the length of the long side is largely different from the length of the short side in a fibrous shape or the like, the length of the short side may be the above size. The content of the filler in the substrate color improving layer, particularly in the brightness enhancing layer, can be in the range of 0 to 50 vol%, and more preferably 0 to 30 vol%.

Fig. 11 is an example of a cooking device top plate in which a filler is contained in a substrate color improving layer. A cooking device top plate 101 in Fig. 11 is an example in which a filler 108 is contained in a brightness enhancing layer 103 that is a substrate color improving layer. As shown in Fig. 11, the filler is contained in the substrate color improving layer, and therefore the strength of the substrate color improving layer (the brightness enhancing layer in the case of Fig. 11) can be increased.

The filler may be contained in a color tone adjusting layer that can be provided as a substrate color improving layer in addition to being contained in the brightness enhancing layer as shown in Fig. 11. In this case, at least one of the color tone adjusting layer and the brightness enhancing layer may contain the filler.

The filler, and a bright material and/or a reflective material to be described later may be contained together in one layer. The bright material and/or the reflective material and the filler may be shared. That is, the same material and shape may be used for both the role of color tone adjustment and the strength enhancement of the layer.

(Color Tone Adjusting Layer)

The substrate color improving layer may include a color tone adjusting layer as a layer other than the brightness enhancing layer. When the brightness enhancing layer does not contain the blue pigment, the color tone adjusting layer can contain the blue pigment. When the brightness enhancing layer contains the blue pigment, the color tone adjusting layer may or may not contain the blue pigment regardless of the presence or absence of the blue pigment contained in the color tone adjusting layer. That is, the substrate color improving layer may include a color tone adjusting layer provided on the lower surface of the brightness enhancing layer and containing a white pigment, or a white pigment and the blue pigment, and/or the substrate color improving layer may include a color tone adjusting layer containing a white pigment, or a white pigment and the blue pigment and provided between the crystallized glass substrate and the brightness enhancing layer.

The type, blending amount, and color tone and the like of the pigment can be optionally selected by the designer. Examples of the method for adjusting the color tone include selecting the type of a blue pigment, and controlling the ratio of a blue pigment and a white pigment in a mixed pigment containing the blue pigment and the white pigment. For example, the following coating material containing a pigment may be used. In addition to the pigment, it is also possible to contain void-containing particles such as hollow glass particles, a porous material; glass particles; silica particles; and ceramic particles; and the like.

Examples of the coating material for forming the color tone adjusting layer include an inorganic coating material containing an inorganic material such as a glass component, a solvent, and the inorganic pigment as main components, and an organic coating material containing an organic resin, a solvent, and the inorganic pigment as main components. Examples of the organic resin contained in the organic coating material include a silicone resin, a modified silicone resin such as an acrylic-modified silicone resin, and a urethane-based resin, and a silicone resin is preferable from the viewpoint of securing heat resistance.

When the color tone adjusting layer is formed using an inorganic coating material, the color tone adjusting layer may contain a glass component in addition to the pigment. The color tone adjusting layer preferably exhibits low-thermal expansibility as with the crystallized glass substrate. From this viewpoint, it is preferable that the color tone adjusting layer is formed of an inorganic coating material containing an inorganic material such as a glass component and a solvent as main components, and contains the glass component as a main component. For example, the color tone adjusting layer preferably has a component composition close to that of the crystallized glass substrate. For example, the component composition of the color tone adjusting layer is adjusted by changing the ratios of $SiO_2$, $Al_2O_3$, $Li_2O$, $TiO_2$, $ZrO_2$, $P_2O_5$, BaO, $Na_2O+K_2O$, and $As_2O_3$ and the like in a batch raw material in the composition of glass constituting the crystallized glass substrate. Alternatively, when the brightness enhancing layer is formed of hollow glass, glass beads, and a porous material or the like, a material close to the thermal expansion coefficient of the material such as the hollow glass constituting the brightness enhancing layer can be used as the material constituting the color tone adjusting layer. As the material constituting the color tone adjusting layer, it is also possible to further use a glass-based binder containing, for example, one or more of $SiO_2$, $Al_2O_3$, $B_2O_3$, ZnO, $P_2O_5$, $Li_2O$, $Na_2O+K_2O$, $Bi_2O_3$, CaO, MgO, BaO, $TiO_2$, $ZrO_2$, and $Sn_2O$ and the like.

The thickness of the color tone adjusting layer can be set to, for example, 0.1 $\mu$m or more in order to sufficiently enhance an effect of eliminating the yellowness of the crystallized glass substrate. The thickness of the color tone adjusting layer can be set to, for example, 100 $\mu$m or less, for example, 50 $\mu$m or less, and from the viewpoint of further suppressing the peeling and cracks and the like of the color tone adjusting layer, the thickness of the color tone adjusting layer can be set to, for example, 10 $\mu$m or less.

As an example of the method for forming the color tone adjusting layer, for example, when the color tone adjusting layer is formed using an inorganic coating material, the pigment, a glass component, and a binder containing an ethyl cellulose-based resin or a nitrocellulose-based resin are mixed to form a paste. The paste is applied to the lower surface of the brightness enhancing layer, that is, the surface of the brightness enhancing layer opposite to the crystallized glass substrate side by screen printing, dried, and then baked at 550 to 900°C. As another example of the method for forming the color tone adjusting layer, when an organic coating material is applied, the organic coating material is dried, and then baked within a range of 250 to 400°C. When the color tone adjusting layer is formed together with the brightness enhancing layer, a method can be adopted, in which the brightness enhancing layer is applied by screen printing or the like and dried, and the color tone adjusting layer is then applied by screen printing or the like, dried, and fired at the above temperature.

When a color tone adjusting layer was provided, the present inventors conducted a preliminary experiment as described below for the purpose of adjusting the color tone with the color tone adjusting layer to achieve the color tone when a white coating material is applied to a conventional borosilicate glass substrate.

By simulating the color tone adjusting layer, white paper (Kent paper: Konayuki 210 manufactured by JITSUTA Corporation) and blue-white printing papers obtained by printing coating materials obtained by blending pigments at blending ratios shown in Table 1 on the same white paper as described above were prepared. Samples in which the crystallized glass substrate (Neoceram N-0 manufactured by Nippon Electric Glass Co., Ltd.) was placed on each of the white paper and the blue-white printing paper are prepared. The surface side of the crystallized glass substrate of each of the samples was subjected to color measurement. In the color measurement, the color tone of the obtained sample was measured as a color system Lab value using a spectrophotometric colorimeter (CM-2600d manufactured by KONICA MINOLTA, INC.). A color difference from a base material obtained by printing the lower surface of a target borosilicate glass substrate with a white ink (hereinafter, referred to as a (borosilicate glass + white ink) base material) was also measured. The results are shown in Table 1.

[Table 1]

| No. | Glass substrate | Color tone adjusting paper | Blending ratio (g) | | | Lab value | | | Color difference from (borosilicate glass + white ink) base material | | | |
|---|---|---|---|---|---|---|---|---|---|---|---|---|
| | | | White | Cobalt | Red | L | a | b | dE | dL | da | db |
| | (Borosilicate glass + white ink) base material | - | - | - | - | 52.6 | 1.1 | -1.2 | - | - | - | - |
| 1 | Crystallized glass substrate (Neoceram N-0) | Kent paper | - | - | - | 64.6 | 1.9 | 4.5 | 11.6 | 10.3 | 1.5 | 4.9 |
| 2 | | Co-15(1) | 10 | 0.1 | - | 62.1 | 0 | -0.3 | 8.2 | 8.1 | -0.9 | 0.8 |
| 3 | | Co-15(2) | 10 | 0.1 | - | 61.6 | -0.1 | -1.1 | 7.8 | 7.8 | -0.8 | 0 |
| 4 | | Co-15R1 | 10 | 0.1 | 0.01 | 61.5 | 0.1 | -1.1 | 7.5 | 7.5 | 0 | 0 |
| 5 | | Co-15R2 | 10 | 0.1 | 0.01 | 61.6 | 0 | -0.7 | 7.5 | 7.5 | -0.2 | 0.1 |

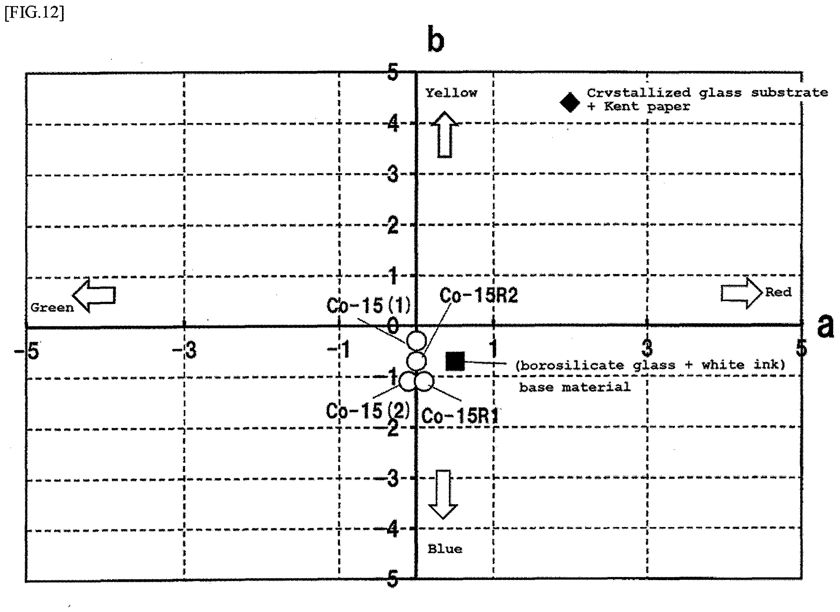

Furthermore, Fig. 12 is a graph showing the color difference from the (borosilicate glass + white ink) base material based on the results in Table 1. In Fig. 12, the brightness is represented in a direction perpendicular to a paper surface. ■ in Fig. 12 indicates the value of the (borosilicate glass + white ink) base material, and the value is preferably closer to ■. From the results shown in Fig. 12, the color tone of the crystallized glass substrate + Kent paper (♦ in Fig. 12) as No. 1 in Table 1 was considerably far from ■ as the target value. Meanwhile, as shown in Nos. 2 to 4 in Table 1, when the blue-white printing paper was disposed on the lower surface of the crystallized glass substrate (Neoceram N-0), the values were sufficiently close to ■ as the target value. From this result, it has been found that slight blue, that is, coloration located downward in Fig. 12 is likely to look white.

As one embodiment of the present invention, preferably, by providing a brightness enhancing layer having a refractive index smaller than that of the crystallized glass substrate, the volume ratio of the blue pigment in the color tone adjusting layer can be reduced, and for example, can be set to 5% or less in the color tone adjusting layer. As a result, the enhancement of the brightness and the suppression of the yellowness can be more easily achieved.

As another embodiment of the present invention, when a cooking device top plate having a high reflectance is achieved, for example, when the reflectance at the interface between the crystallized glass substrate and the brightness enhancing layer is 70% or more, the amount of light reaching the color tone adjusting layer is 30% or less of the amount of incident light, which is small. In such a case, the color tone adjusting layer is preferably dark blue from the viewpoint of reliably eliminating the yellowness of the crystallized glass to bring the crystallized glass closer to white. For example, blue having a b-value of less than -1 in the Lab value of the color tone adjusting layer alone is selected, or the ratio of the white pigment to be mixed with the blue pigment is reduced.

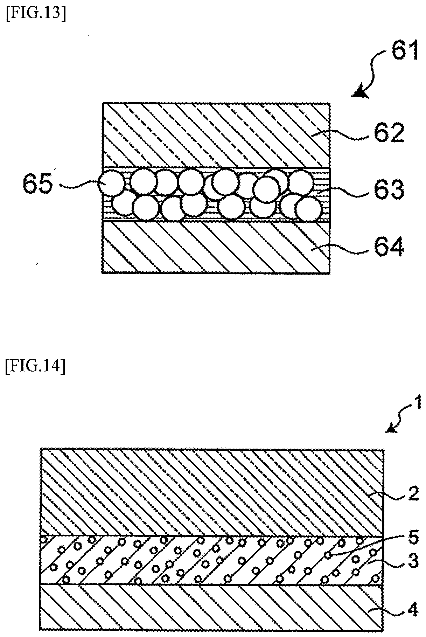

Examples of as an embodiment having the color tone adjusting layer include a cooking device top plate 61 having a configuration in which a crystallized glass substrate 62, a layer containing hollow glass 65 and a blue pigment as a brightness enhancing layer 63, and a white organic coating material layer formed as a color tone adjusting layer 64 are laminated, as shown in Fig. 13. Although not shown in Fig. 13, for example, a light shielding layer or the like may be formed on the lower surface of the color tone adjusting layer 64.

The color tone adjusting layer may be provided between the crystallized glass substrate and the brightness enhancing layer as described above, different from being formed below the brightness enhancing layer. In this case, the color tone adjusting layer may be provided at a plurality of positions between the crystallized glass substrate and the brightness enhancing layer and below the brightness enhancing layer.

The color tone adjusting layer may also be an adhesion enhancing layer. For example, when the color tone adjusting layer is provided between the crystallized glass substrate and the brightness enhancing layer, the color tone adjusting layer can act as an adhesion enhancing layer between the crystallized glass substrate and the brightness enhancing layer. When a light shielding layer is provided below the brightness enhancing layer and a color tone adjusting layer is provided between the brightness enhancing layer and the light shielding layer, the color tone adjusting layer can act as an adhesion enhancing layer between the brightness enhancing layer and the light shielding layer.

[Bright Material/Reflective Material]

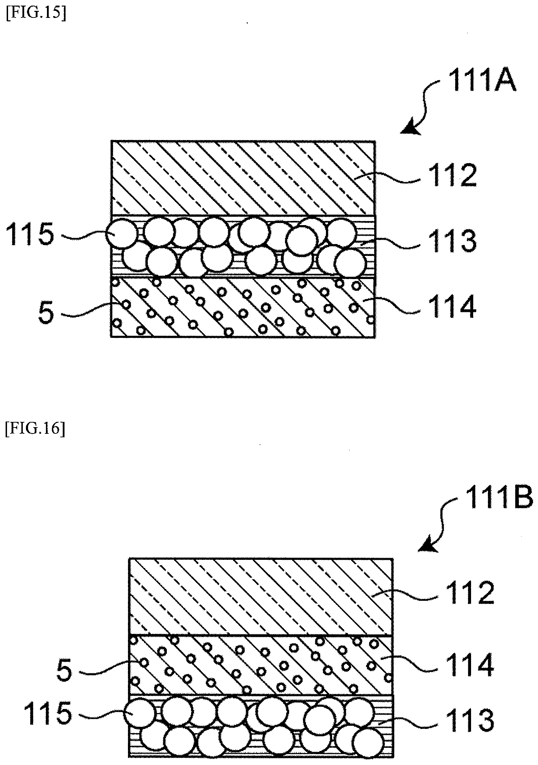

One or more of the bright material and the reflective material may be contained in one or more of the brightness enhancing layer (excluding a case where the brightness enhancing layer is formed only of voids) and the adhesion enhancing layer as the strength enhancing member, and/or the substrate color improving layer may include a color tone adjusting layer, and the color tone adjusting layer may contain one or more of the bright material and the reflective material. Fig. 14 illustrates a case where the brightness enhancing layer 3 contains one or more of the bright material and the reflective material (also referred to as "bright material and/or reflective material") 5. Fig. 15 is a schematic cross-sectional view of a cooking device top plate 111A in which a bright material and/or reflective material 5 is contained in a color tone adjusting layer 114 below a brightness enhancing layer 113. Fig. 16 is a schematic cross-sectional view of a cooking device top plate 111B in which the bright material and/or reflective material 5 is contained in the color tone adjusting layer 114 located between a crystallized glass substrate 112 and the brightness enhancing layer 113. Note that these drawings are views for explaining a position where the bright material and/or the reflective material are contained, and the strength enhancing member is not illustrated. The bright material and/or the reflective material may also serve as the strength enhancing member.

Examples of the bright material and/or the reflective material include one or more selected from the group consisting of metal oxides such as mica, silica (silicon dioxide), alumina, titania, zirconia, and zinc oxide, aluminum, glass, these materials having surfaces coated with metals or metal oxides, and a material in which a metal or a metal compound is vacuum-deposited on a polymer film, followed by powderizing. Among these, one or more selected from the group consisting of mica, silica, the metal oxide, aluminum flakes, glass particles, glass flakes, glass flakes including a vapor deposited metal layer, and mica including a metal oxide layer are preferable. The glass particles may be, for example, self-reflecting glass beads.

Examples of the shape of the bright material and/or reflective material 5 include a spherical shape, a square shape, a rod shape, a branch shape, and a flake shape. The size of the bright material and/or reflective material 5 is not particularly limited, and may be appropriately determined in consideration of a target reflectance. The size of the bright material and/or reflective material 5 may be an average particle size of 0.1 $\mu$m to 100 $\mu$m. The ratio of the bright material and/or reflective material 5 in the brightness enhancing layer 3 is also not particularly limited, and can be appropriately determined in consideration of the target reflectance.

As the bright material and/or reflective material 5, for example, pearl mica or the like in which a metal or a metal oxide is coated on the surface of mica or the like is added in a small amount within a range in which the transparency of the brightness enhancing layer 3 can be maintained, whereby the adjustment of the color tone can be assisted while reflection characteristics are enhanced, which is preferable.

[Crystallized Glass Substrate]

In the present invention, a crystallized glass substrate containing $Li_2O\text{-}Al_2O_3\text{-}SiO_2$ as a main component and a transition element is used. Glass constituting the substrate preferably contains one or more kinds of low-expansion crystals such as $\beta$-quartz, $\beta$-spodumene, aluminum titanate, and cordierite. Furthermore, those containing a $\beta$-quartz solid solution or a $\beta$-spodumene solid solution as a main crystal are more preferable.

In the crystallized glass, a $\beta$-quartz solid solution crystal exhibiting negative expansion characteristics and a remaining glass layer exhibiting positive expansion characteristics cancel each other, whereby the thermal expansion coefficient of the entire crystallized glass can be kept low. As the low-thermal expansibility, for example, the absolute value of the thermal expansion coefficient is $30\times10^{-7}/°C$ or lower.

The thickness of the crystallized glass substrate can be set to, for example, 3 mm to 10 mm. The refractive index of the crystallized glass substrate is, for example, about 1.4 to 2.0.

[Roughening of Lower Surface of Crystallized Glass Substrate]

As one embodiment of the present invention, by roughening the lower surface of the crystallized glass substrate, that is, the surface of the crystallized glass substrate on a side opposite to a cooking side, diffuse reflection of light is generated to increase the reflectance, and as a result, the brightness can be enhanced.

When the purpose is to increase the reflectance, for example, the roughening is performed such that the surface roughness Ra of the lower surface of the crystallized glass substrate is 0.1 $\mu$m or more. As the surface roughness Ra increases, the brightness is enhanced, but from the viewpoint of maintaining the durability of the crystallized glass substrate against impact the surface roughness Ra is preferably smaller, for example, 10 $\mu$m or less.

The method of the roughening treatment is divided into a physical method and a chemical method. Examples of the physical method include sand blasting using silicon carbide (SiC), alumina ($Al_2O_3$), zirconia ($ZrO_2$), and diamond (C) and the like as a grind stone, and free abrasive polishing using a polishing agent. Examples of the chemical method include a method for immersing in an etching solution containing hydrofluoric acid.

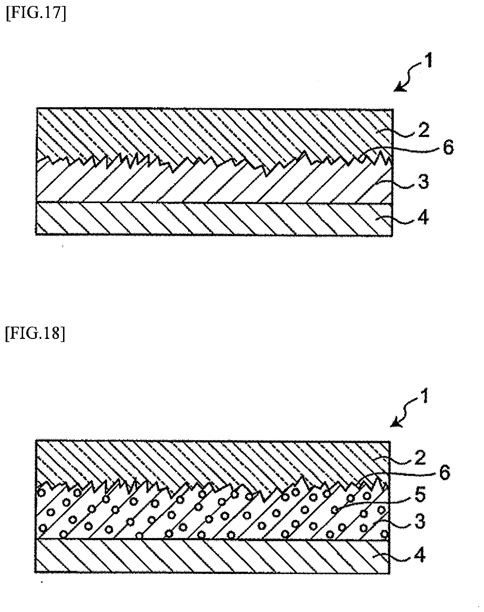

Fig. 17 is a schematic cross-sectional view of a cooking device top plate shown as an embodiment of the present invention. In Fig. 17, the interface between a crystallized glass substrate 2 and a brightness enhancing layer 3 is a roughened surface 6. In a cooking device top plate 1 in Fig. 17, the brightness enhancing layer 3 is formed on the roughened surface 6 after the lower surface of the crystallized glass substrate 2 is roughened. In Fig. 17, the reflection at the interface between the crystallized glass substrate 2 and the brightness enhancing layer 3 is larger than that in Fig. 2, whereby the brightness can be further enhanced.

Fig. 18 is a schematic cross-sectional view of a cooking device top plate shown as an embodiment of the present invention. In the embodiment of Fig. 18, the interface between a crystallized glass substrate 2 and a brightness enhancing layer 3 is a roughened surface, and as with the embodiment of Fig. 14, a bright material and/or reflective material 5 is dispersed in the brightness enhancing layer 3. In a cooking device top plate 1 in Fig. 18, the brightness enhancing layer 3 containing the bright material and/or reflective material 5 is formed on a roughened surface 6 after the lower surface of the crystallized glass substrate 2 is roughened. In Fig. 18, due to the reflection at the interface between the crystallized glass substrate 2 and the brightness enhancing layer 3 and the diffuse reflection of light provided by the bright material and/or reflective material 5 in the brightness enhancing layer 3, the reflection is further increased as compared with Figs. 2, 14, and 17, whereby the brightness can be further enhanced.

(Light Shielding Layer)

In the cooking device top plate of the present embodiment, a light shielding layer may be provided on the lower surface of the substrate color improving layer as necessary. Specifically, a light shielding layer may be provided on the lower surface of the brightness enhancing layer or the color tone adjusting layer as the substrate color improving layer as necessary. The light shielding layer may be formed by applying, for example, a heat-resistant coating material to the lower surface of the color tone adjusting layer. As the heat-resistant coating material, a mixture obtained by adding an inorganic pigment for coloring to a heat-resistant resin containing a silicone resin, a polyamide resin, a fluororesin, or a composite thereof can be used. In consideration of heat resistance, a layer coated with an ink containing a glassy component containing $SiO_2$, $Al_2O_3$, or $Li_2O$ or the like, which is a component close to that of the crystallized glass substrate, as a main component, and a black inorganic pigment ($Fe_2O_3$-based, $MnO_2$-based, CuO-based, or $Co_2O_3$-based metal oxide pigment) as a pigment for light shielding may be provided on the lower surface of the color tone adjusting layer as necessary.

As described above, when the light shielding layer is provided on the lower surface of the substrate color improving layer, the adhesion between the substrate color improving layer and the light shielding layer can be enhanced by including the adhesion enhancing layer as the strength enhancing member between the substrate color improving layer and the light shielding layer.

(Second Glass Substrate)

In the cooking device top plate of the present embodiment, as the second glass substrate, a tempered glass substrate, a crystallized glass substrate may be further formed on the lower surface of the substrate color improving layer, specifically, the lower surface of the brightness enhancing layer or the color tone adjusting layer, separately from the crystallized glass substrate constituting the outermost surface of the cooking device top plate, as necessary.

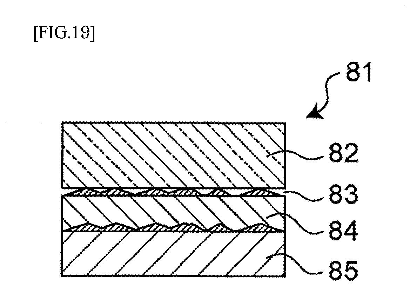

The upper surface of the second glass substrate may be roughened by the same method as the roughening of the crystallized glass substrate. As described above, in a method for providing irregularities on the upper surface of the color tone adjusting layer, the upper surface of the second glass substrate is roughened to provide the irregularities, and the color tone adjusting layer (light blue glass coating material layer) is formed along the irregularities, whereby the color tone adjusting layer having the irregularities on the upper surface can be formed. For example, as shown in Fig. 19, a cooking device top plate 81 can be formed, in which a brightness enhancing layer 83 is formed as a void-containing layer between a color tone adjusting layer 84 provided on the upper surface of a second glass substrate 85 having irregularities and having irregularities on the upper surface and a crystallized glass substrate 82.

EXAMPLES

Hereinafter, the present invention will be more specifically described with reference to Examples. The present invention is not limited by the following Examples, and can also be implemented with appropriate modifications within the scope that can be consistent with the above-described and later-described gist. Any of them is included in the technical scope of the present invention.

[Preparation of Sample]

(Example 1)

For the formation of a first layer, a paste containing a glass component: $Li_2O$-$Al_2O_3$-$SiO_2$ as a main component and a solvent was screen-printed on the surface of a crystallized glass substrate (Neoceram N-0 manufactured by Nippon Electric Glass Co., Ltd., thickness: 4 mm). The number of meshes at the time of screen printing was #325. After the screen printing, drying was performed at 160°C for 10 minutes.

Then, for the formation of a second layer, a paste obtained by kneading

· 1.1 g of hollow glass having a particle diameter of about 3 $\mu$m,
· 0.5 g of a paste containing a glass component: $Li_2O$-$Al_2O_3$-$SiO_2$ as a main component and a solvent, as a binder,
· 0.1 g of a blue inorganic coating material containing a glass component, and
· appropriate oil

was prepared. The paste was screen-printed on the surface of the first layer before firing. The number of meshes at the time of screen printing was #100. After the screen printing, drying was performed at 160°C for 10 minutes, and firing was then performed at 600 to 700°C for 10 minutes to obtain a sample in which the first layer (about 20 $\mu$m) and the second layer (about 40 $\mu$m) were laminated in this order on the surface of the crystallized glass substrate.

(Example 2)

For the formation of a first layer, a paste obtained by kneading

· 0.4 g of hollow glass having a particle diameter of about 3 $\mu$m,
· 0.5 g of a paste containing a glass component: $Li_2O$-$Al_2O_3$-$SiO_2$ as a main component and a solvent, as a binder,
· 0.1 g of a blue inorganic coating material, and
· appropriate oil

was prepared. The paste was screen-printed on the surface of a crystallized glass substrate (Neoceram N-0 manufactured by Nippon Electric Glass Co., Ltd., thickness: 4 mm). The number of meshes at the time of screen printing was #325. After the screen printing, drying was performed at 160°C for 10 minutes.

Then, for the formation of a second layer, a paste obtained by kneading

· 1.1 g of hollow glass having a particle diameter of about 3 $\mu$m,
· 0.5 g of a paste containing a glass component: $Li_2O$-$Al_2O_3$-$SiO_2$ as a main component and a solvent, as a binder,
· 0.1 g of a blue inorganic coating material containing a glass component, and
· appropriate oil

was prepared. The paste was screen-printed on the upper surface of the first layer before firing. The number of meshes at the time of screen printing was #100. After the screen printing, drying was performed at 160°C for 10 minutes, and firing was then performed at 600 to 700°C for 10 minutes to obtain a sample in which the first layer (about 20 $\mu$m) and the second layer (about 40 $\mu$m) were laminated in this order on the surface of the crystallized glass substrate.

(Example 3)

For the formation of a first layer, a paste obtained by kneading

· 1.1 g of hollow glass having a particle diameter of about 3 $\mu$m,
· 0.5 g of a paste containing a glass component: $SiO_2$-$B_2O_3$-$ZnO$ as a main component and a solvent, as a binder,
· 0.1 g of a blue inorganic coating material, and
· appropriate oil

was prepared. The paste was screen-printed on the surface of a crystallized glass substrate (Neoceram N-0 manufactured by Nippon Electric Glass Co., Ltd., thickness: 4 mm). The number of meshes at the time of screen printing was # 100. After the screen printing, drying was performed at 160°C for 10 minutes, and firing was then performed at 580 to 680°C for 10 minutes to obtain a brightness enhancing layer as the first layer.

Then, for the formation of a second layer, a paste obtained by kneading an organic coating material (silicone-based) and a material based on titanium oxide was prepared. The paste was screen-printed on the upper surface of the first layer obtained by firing. The number of meshes at the time of screen printing was #100. After the screen printing, drying was performed at 160°C for 10 minutes, and firing was then performed at 280°C for 1 hour to obtain a sample in which the first layer and the second layer were laminated in this order on the surface of the crystallized glass substrate.

(Example 4)

For the formation of a first layer, a paste obtained by kneading

· 3 g of glass beads having a particle diameter of about 1 to 2 $\mu$m,
· 0.5 g of a paste containing a glass component: $SiO_2$-$B_2O_3$-$ZnO$ as a main component and a solvent, as a binder,
· 0.1 g of a blue inorganic coating material, and
· appropriate oil

was prepared. The paste was screen-printed on the surface of a crystallized glass substrate (Neoceram N-0 manufactured by Nippon Electric Glass Co., Ltd., thickness: 4 mm). The number of meshes at the time of screen printing was #100. After the screen printing, drying was performed at 160°C for 10 minutes, and firing was then performed at 580 to 680°C for 10 minutes.

Then, for the formation of a second layer, a paste obtained by kneading an organic coating material (silicone-based) and a material based on titanium oxide was prepared. The paste was screen-printed on the surface of the first layer obtained by firing. The number of meshes at the time of screen printing was #180. After the screen printing, drying was performed at 160°C for 10 minutes, and firing was then performed at 280°C for 1 hour to obtain a sample in which the first layer and the second layer were laminated in this order on the surface of the crystallized glass substrate.

(Example 5-1)

For the formation of a first layer, a paste obtained by kneading

· 1.1 g of hollow glass having a particle diameter of about 3 μm,
· 0.5 g of a paste containing a glass component: $SiO_2$-$B_2O_3$-$ZnO$ as a main component and a solvent, as a binder,
· 0.1 g of a blue inorganic coating material,
· 0.1 g of a thin sheet-shaped material (pearl material) in which the periphery of mica is coated with titanium oxide, and
· appropriate oil

was prepared. The paste was screen-printed on the surface of a crystallized glass substrate (Neoceram N-0 manufactured by Nippon Electric Glass Co., Ltd., thickness: 4 mm). The number of meshes at the time of screen printing was #100. After the screen printing, drying was performed at 160°C for 10 minutes, and firing was then performed at 580 to 780°C for 10 minutes to obtain a sample in which a brightness enhancing layer containing the pearl material was formed on the surface of the crystallized glass substrate.

(Example 5-2)

For the formation of a second layer on the surface of the brightness enhancing layer of the sample of Example 5-1, a paste obtained by kneading an organic coating material (silicone-based) and a material based on titanium oxide was prepared. The paste was screen-printed on the surface of the first layer formed in the same manner as in Example 5-1. The number of meshes at the time of screen printing was #180. After the screen printing, drying was performed at 160°C for 10 minutes, and firing was then performed at 280°C for 1 hour to obtain a sample in which the first layer and the second layer were laminated in this order on the surface of the crystallized glass substrate.

(Example 6)

For the formation of a layer, a paste obtained by kneading

· 1.1 g of hollow glass having a particle diameter of about 2 μm,
· 0.5 g of glass fiber,
· 0.5 g of a paste containing a silicone resin as a main component and a solvent, as a binder,
• 0.15 g of a blue organic coating material, and
• appropriate oil

was prepared. The paste was screen-printed on the surface of a crystallized glass substrate (Neoceram N-0 manufactured by Nippon Electric Glass Co., Ltd., thickness: 4 mm). The number of meshes at the time of screen printing was #100. After the screen printing, drying was performed at 160°C for 10 minutes, and firing was then performed at 280°C for 1 hour to obtain a sample in which the layer was formed on the surface of the crystallized glass substrate.

(Example 7)

For the formation of a first layer, a paste obtained by kneading

· 2 g of hollow glass having a particle diameter of about 3 μm,
· 0.3 g of silica powder (primary particle diameter: several tens nm),
· 1 g of a paste containing a glass component: $SiO_2$-$B_2O_3$-$ZnO$ as a main component and a solvent, as a binder,
· 0.2 g of a blue inorganic coating material, and
· appropriate oil

was prepared. The paste was screen-printed on the surface of a crystallized glass substrate (Neoceram N-0 manufactured by Nippon Electric Glass Co., Ltd., thickness: 4 mm). The number of meshes at the time of screen printing was #100. After the screen printing, drying was performed at 160°C for 10 minutes to obtain the first layer before firing. A second layer was formed on the surface of the first layer before firing in the same manner as in the first layer, dried at 160°C for 10 minutes, and then fired at 580 to 680°C for 10 minutes to obtain a sample in which the first layer and the second layer were sequentially laminated on the surface of the crystallized glass substrate.

(Example 8)

For the formation of a first layer, a paste obtained by kneading

· 1.1 g of hollow glass having a particle diameter of about 3 $\mu$m,
· 0.5 g of a paste containing a glass component: $SiO_2$-$B_2O_3$-ZnO as a main component and a solvent, as a binder,
· 0.1 g of a blue inorganic coating material, and
· appropriate oil

was prepared. The paste was screen-printed on the surface of a crystallized glass substrate (Neoceram N-0 manufactured by Nippon Electric Glass Co., Ltd., thickness: 4 mm). The number of meshes at the time of screen printing was #100. After the screen printing, drying was performed at 160°C for 10 minutes to obtain the first layer before firing.
Then, for the formation of a second layer, a paste obtained by kneading

· 0.8 g of hollow glass having a particle diameter of about 3 $\mu$m,
· 0.5 g of a paste containing a glass component: $SiO_2$-$B_2O_3$-ZnO as a main component and a solvent, as a binder,
· appropriate oil

was prepared. The paste was screen-printed on the surface of the first layer before firing. The number of meshes at the time of screen printing was #325. After the screen printing, drying was performed at 160°C for 10 minutes, and firing was then performed at 580 to 680°C for 10 minutes to obtain a laminate of the first layer and the second layer.
Then, for the formation of a third layer, a paste obtained by kneading an organic coating material (silicone-based) and a material based on titanium oxide was prepared. The paste was screen-printed on the surface of the second layer obtained by firing. The number of meshes at the time of screen printing was #325. After the screen printing, drying was performed at 160°C for 10 minutes, and firing was then performed at 280°C for 1 hour to obtain a sample in which the first layer, the second layer, and the third layer were laminated in this order on the surface of the crystallized glass substrate.

(Example 9)

For the formation of a layer, a paste obtained by kneading

· 6 g of glass beads having a particle diameter of about 35 $\mu$m and a particle diameter of about 10 $\mu$m,
· 0.5 g of a paste containing a glass component: $SiO_2$-$B_2O_3$-ZnO as a main component and a solvent, as a binder,
· 0.1 g of a blue inorganic coating material

was prepared. The paste was screen-printed on the surface of a crystallized glass substrate (Neoceram N-0 manufactured by Nippon Electric Glass Co., Ltd., thickness: 4 mm). The number of meshes at the time of screen printing was #100. After the screen printing, drying was performed at 160°C for 10 minutes, and firing was then performed at 580 to 680°C for 10 minutes to obtain a sample.

(Comparative Example 1)

For the formation of a first layer, a paste obtained by kneading

· 1.1 g of hollow glass having a particle diameter of about 3 $\mu$m,
· 0.5 g of a paste containing a glass component: $SiO_2$-$B_2O_3$-ZnO as a main component and a solvent, as a binder,
· 0.1 g of a blue inorganic coating material, and
· appropriate oil

was prepared. The paste was screen-printed on the surface of a crystallized glass substrate (Neoceram N-0 manufactured by Nippon Electric Glass Co., Ltd., thickness: 4 mm). The number of meshes at the time of screen printing was #100. After the screen printing, drying was performed at 160°C for 10 minutes, and firing was then performed at 580 to 680°C for 10 minutes to obtain a sample.

(Comparative Example 2)

For the formation of a first layer, a paste obtained by kneading

· 1.1 g of hollow glass having a particle diameter of about 3 $\mu$m,
· 0.5 g of a paste containing a glass component: $SiO_2$-$B_2O_3$-ZnO as a main component and a solvent, as a binder,
· 0.1 g of a blue inorganic coating material, and
· appropriate oil

was prepared. The paste was screen-printed on the surface of a crystallized glass substrate (Neoceram N-0 manufactured by Nippon Electric Glass Co., Ltd., thickness: 4 mm). The number of meshes at the time of screen printing was #100. After the screen printing, drying was performed at 160°C for 10 minutes to obtain the first layer before firing. Then, for the formation of a second layer on the surface of the first layer before firing, a paste was screen-printed in the same manner as in the first layer, and then dried at 160°C for 10 minutes. Firing was performed at 580 to 680°C for 10 minutes to obtain a sample in which the first layer and the second layer were formed on the surface of the crystallized glass substrate.

[Evaluations]

The prepared samples were subjected to the following evaluations.

(Refractive Index of Brightness Enhancing Layer)

A refractive index was determined by the above-described method using a spectroscopic ellipsometer. When the brightness enhancing layer was a void-containing layer, the refractive index was determined according to the ratio of voids as described above. As a result, while the refractive index of the crystallized glass substrate was 1.54, the refractive index of the brightness enhancing layer was smaller than that of the crystallized glass substrate in each example. These results show that when the brightness enhancing layer is the void-containing layer, the refractive index of the brightness enhancing layer becomes closer to the refractive index of 1.0 of an air layer, whereby a light extraction ratio in the crystallized glass substrate is increased as described above, and further improvement in brightness and suppression of yellowness can be achieved. When it is difficult to measure the refractive index because of the film coated with the brightness enhancing layer, for example, the film may be analyzed by energy dispersive X-ray analysis (EDX), wavelength dispersive X-ray analysis (WDX), fluorescent X-ray analysis, high frequency inductively coupled plasma (ICP) emission spectrometry, or NMR (nuclear magnetic resonance), or X-ray photoelectron spectroscopy (XPS) or the like, and the refractive index of the brightness enhancing layer may be estimated from the refractive index (which may be a literature value) of a material composition close to the material composition estimated therefrom and the ratio of voids.

(Measurement of L Value)

The crystallized glass substrate of each of the samples obtained as described above as the outermost surface was subjected to color measurement. In the color measurement, a color space L*a*b* was measured using a color difference meter (CR410 manufactured by KONICA MINOLTA, INC.). As a result, L values indicating brightness were as shown in Table 2. From this result, it can be seen that by providing the substrate color improving layer including the layer containing hollow glass as the brightness enhancing layer on the lower surface of the crystallized glass substrate, the brightness could be sufficiently enhanced as compared with the case where the color tone adjusting layer formed of the organic coating material was directly formed on the lower surface of the crystallized glass substrate.

[Table 2]

|  | Color measurement | | |
|---|---|---|---|
|  | L* | a* | b* |
| Example 1 | 63 | -0.8 | -0.3 |
| Example 2 | 76 | -1.2 | -4 |
| Example 3 | 76 | -0.9 | 0.5 |
| Example 4 | 77 | -0.8 | 1.0 |
| Example 5-1 | 78 | -0.9 | 0.6 |
| Example 5-2 | 76 | -1.1 | 0.6 |
| Example 6 | 72 | -0.6 | -0.3 |

(continued)

|  | Color measurement | | |
|---|---|---|---|
|  | L* | a* | b* |
| Example 7 | 79 | -0.9 | -0.8 |
| Example 8 | 78 | -0.8 | -0.2 |
| Example 9 | 73 | -1.1 | -0.3 |
| Comparative Example 1 | 78 | -0.9 | 0.6 |
| Comparative Example 2 | 79 | -0.9 | -1.0 |

(Evaluation of Adhesion (Cross-Cut Evaluation))

Using a cutter, notches were made in the cross-cut form of 100 squares at an interval of 1 mm, and a cellophane tape was then stuck. Thereafter, a cellophane tape was attached and then peeled off. The cellophane tape was stuck and peeled off three times in total. A case where a larger amount of the cross-cut coating film remained after the third peeling off of the cellophane tape than the result of Comparative Example 1 was evaluated as being excellent in adhesion. As a result, in each of Examples, a larger amount of the cross-cut coating film remained than that in Comparative Example 1, and excellent adhesion was obtained. In Example 5-2, a larger amount of the cross-cut coating film remained than that in Example 5-1, and more excellent adhesion was obtained.

In Example 1, by providing the glass layer as the adhesion enhancing layer between the crystallized glass substrate and the brightness enhancing layer, the adhesion between the crystallized glass substrate and the brightness enhancing layer was enhanced, and the overall strength was enhanced. Example 2 is an example in which the first layer having a different filler (hollow glass) concentration is provided between the crystallized glass substrate and the brightness enhancing layer (second layer) to enhance the strength. By adding the hollow glass to the first layer, the brightness was enhanced as compared with Example 1. Example 3 is an example in which the filler (titanium oxide) was contained in the color tone adjusting layer (second layer) to enhance the film strength. It is also conceivable that the second layer component (organic resin, titanium oxide) partially penetrates into the surface layer part of the first layer to improve the adhesion. As an application example of Example 2, it is also conceivable to further enhance the brightness by forming the two first layers.

Example 4 is an example in which the filler (titanium oxide) is contained in the color tone adjusting layer (second layer) to enhance the film strength. Example 5-1 is an example in which the filler (thin sheet-shaped material) is added to enhance the film strength. Example 5-2 is an example in which the filler (titanium oxide) is contained in the color tone adjusting layer (second layer) to enhance the film strength.

Example 6 is an example in which the filler (glass fiber) is added to the brightness enhancing layer to enhance the film strength. Example 7 is an example in which the particles having different particle sizes are added to cause a reinforcing effect of filling gaps to enhance the strength. In Example 8, the layer containing a larger amount of binder is provided between the brightness enhancing layer and the color tone adjusting layer (third layer) to further improve the adhesion to the substrate color improving layer. Example 9 is an example in which the particles having different particle sizes are added to cause a reinforcing effect of filling gaps to enhance the strength.

The disclosure contents herein may include the following aspects.

An aspect 1 is a cooking device top plate comprising:

a crystallized glass substrate containing $Li_2O$-$Al_2O_3$-$SiO_2$ as a main component and a transition element;
a substrate color improving layer provided on a lower surface of the crystallized glass substrate, the substrate color improving layer containing a blue pigment and including one or more brightness enhancing layers containing voids and having a refractive index smaller than that of the crystallized glass substrate or not less than (a refractive index of the crystallized glass substrate + 0.1); and
a strength enhancing member.

An aspect 2 is the cooking device top plate according to the aspect 1, wherein the brightness enhancing layer contains the blue pigment.

An aspect 3 is the cooking device top plate according to the aspect 1 or 2, further comprising an adhesion enhancing layer as the strength enhancing member between the crystallized glass substrate and the substrate color improving layer.

An aspect 4 is the cooking device top plate according to any one of the aspects 1 to 3, wherein the cooking device top plate includes a plurality of brightness enhancing layers, and an adhesion enhancing layer is provided as the strength enhancing member between one brightness enhancing layer and another adjacent brightness enhancing layer.

An aspect 5 is the cooking device top plate according to the aspect 3 or 4, wherein the adhesion enhancing layer includes one or more glass thin films.

An aspect 6 is the cooking device top plate according to the aspect 3 or 4, wherein the adhesion enhancing layer is a void-containing layer having a different void ratio or/and material composition from that of the brightness enhancing layer.

An aspect 7 is the cooking device top plate according to any one of the aspects 1 to 6, wherein one or more of the brightness enhancing layer and the adhesion enhancing layer as the strength enhancing member include one or more of a reflective material and a bright material.

An aspect 8 is the cooking device top plate according to the aspect 7, wherein one or more of the reflective material and the bright material are one or more selected from the group consisting of mica, silica, metal oxide, aluminum flakes, glass particles, glass flakes, glass flakes including a vapor deposited metal layer, and mica including a metal oxide layer.

An aspect 9 is the cooking device top plate according to any one of the aspects 1 to 8, wherein the substrate color improving layer contains a filler as the strength enhancing member.

An aspect 10 is the cooking device top plate according to any one of the aspects 1 to 9, wherein the brightness enhancing layer contains a filler as the strength enhancing member.

An aspect 11 is the cooking device top plate according to the aspect 9 or 10, wherein the filler is composed of one or more selected from the group consisting of a metal, a metal oxide, ceramic, a metal salt, glass, silica, mica, talc, clay, zeolite, an organic material, and a composite thereof, and a material having at least one of a coupling material, an active group, a reactive group, an organic substance, and a metal oxide bonded, adsorbed, or deposited on the surface thereof.

An aspect 12 is the cooking device top plate according to any one of the aspects 1 to 11, wherein the substrate color improving layer is formed of the brightness enhancing layer.

An aspect 13 is the cooking device top plate according to any one of the aspects 1 to 11, wherein the substrate color improving layer includes a color tone adjusting layer provided on a lower surface of the brightness enhancing layer, the color tone adjusting layer containing a white pigment, or a white pigment and the blue pigment.

An aspect 14 is the cooking device top plate according to any one of the aspects 1 to 11 and 13, wherein the substrate color improving layer includes a color tone adjusting layer containing a white pigment, or a white pigment and the blue pigment and provided between the crystallized glass substrate and the brightness enhancing layer.

An aspect 15 is the cooking device top plate according to the aspect 14, wherein the color tone adjusting layer is also an adhesion enhancing layer.

An aspect 16 is the cooking device top plate according to the aspect 15, wherein the adhesion enhancing layer includes one or more glass thin films.

An aspect 17 is the cooking device top plate according to the aspect 15, wherein the adhesion enhancing layer is a void-containing layer having a different void ratio or/and material composition from that of the brightness enhancing layer.

An aspect 18 is the cooking device top plate according to any one of the aspects 13 to 17, wherein the color tone adjusting layer contains one or more of a reflective material and a bright material.

An aspect 19 is the cooking device top plate according to the aspect 18, wherein one or more of the reflective material and the bright material are one or more selected from the group consisting of mica, silica, metal oxide, aluminum flakes, glass particles, glass flakes, glass flakes including a vapor deposited metal layer, and mica including a metal oxide layer.

An aspect 20 is the cooking device top plate according to any one of the aspects 1 to 19, further comprising a light shielding layer provided on a lower surface of the substrate color improving layer.

An aspect 21 is the cooking device top plate according to the aspect 20, further comprising an adhesion enhancing layer as the strength enhancing member between the substrate color improving layer and the light shielding layer.

An aspect 22 is the cooking device top plate according to any one of the aspects 1 to 21, wherein the brightness enhancing layer is

a void-containing layer containing one or more selected from the group consisting of hollow particles, a porous material, and a structure having voids between particles, or
a void-containing layer in which irregularities are formed on a lower surface of the crystallized glass substrate so that voids can be secured.

An aspect 23 is the cooking device top plate according to any one of the aspects 13 to 22, wherein the brightness enhancing layer is

a void-containing layer in which a spacer is provided between the crystallized glass substrate and the color tone adjusting layer so that voids can be secured, or

a void-containing layer in which irregularities are formed on an upper surface of the color tone adjusting layer so that voids can be secured.

This application claims priority based on Japanese Patent Application No. 2021-140187 filed on August 30, 2021. Japanese Patent Application No. 2021-140187 is incorporated herein by reference.

Industrial Applicability

As described above, the present invention makes it possible to provide a cooking device top plate that contains crystallized glass exhibiting high strength and low-thermal expansibility as a substrate and exhibits white. Therefore, it is possible to provide a tabletop type, stationary type, or built-in type cooking device that exhibits white and is used in a dining table and a cooking table and the like of a general household, and a kitchen for business use, and the like.

EXPLANATION OF REFERENCES

1, 21, 31, 41, 51, 61, 71, 81, 91A, 91B, 101, 111A, 111B Cooking device top plate
2, 22, 32, 42, 52, 62, 72, 82, 92, 102, 112 Crystallized glass substrate
3, 23, 33, 43, 53, 63, 73, 83, 93, 103, 113 Brightness enhancing layer
4, 24, 34, 44, 54, 64, 74, 84, 114 Color tone adjusting layer
5 Bright material and/or reflective material
6 Roughened surface
7 Light reflected at interface between crystallized glass substrate and brightness enhancing layer
8 Light reflected at interface between brightness enhancing layer and color tone adjusting layer
9 Colored layer of preliminary experiment sample (white + blue)
10 Light reflected at interface between crystallized glass substrate 2 and colored layer 9
11A Colored layer of preliminary experiment sample (white)
11B White paper in preliminary experiment sample
12 Air layer
25, 65, 75, 95, 105, 115 Hollow glass
35 Spacer
36 Hollow layer
85 Second glass substrate
97, 97B Adhesion enhancing layer
108 Filler

## Claims

1. A cooking device top plate comprising:

   a crystallized glass substrate containing $Li_2O$-$Al_2O_3$-$SiO_2$ as a main component and a transition element;
   a substrate color improving layer provided on a lower surface of the crystallized glass substrate, the substrate color improving layer containing a blue pigment and including one or more brightness enhancing layers containing voids and having a refractive index smaller than that of the crystallized glass substrate or not less than (a refractive index of the crystallized glass substrate + 0.1); and
   a strength enhancing member.

2. The cooking device top plate according to claim 1, wherein the brightness enhancing layer contains the blue pigment.

3. The cooking device top plate according to claim 1 or 2, further comprising an adhesion enhancing layer as the strength enhancing member between the crystallized glass substrate and the substrate color improving layer.

4. The cooking device top plate according to any one of claims 1 to 3, wherein the cooking device top plate includes a plurality of brightness enhancing layers, and an adhesion enhancing layer is provided as the strength enhancing member between one brightness enhancing layer and another adjacent brightness enhancing layer.

5. The cooking device top plate according to claim 3 or 4, wherein the adhesion enhancing layer includes one or more glass thin films.

6. The cooking device top plate according to claim 3 or 4, wherein the adhesion enhancing layer is a void-containing layer having a different void ratio or/and material composition from that of the brightness enhancing layer.

7. The cooking device top plate according to any one of claims 1 to 6, wherein one or more of the brightness enhancing layer and the adhesion enhancing layer as the strength enhancing member include one or more of a reflective material and a bright material.

8. The cooking device top plate according to claim 7, wherein one or more of the reflective material and the bright material are one or more selected from the group consisting of mica, silica, metal oxide, aluminum flakes, glass particles, glass flakes, glass flakes including a vapor deposited metal layer, and mica including a metal oxide layer.

9. The cooking device top plate according to any one of claims 1 to 8, wherein the substrate color improving layer contains a filler as the strength enhancing member.

10. The cooking device top plate according to any one of claims 1 to 9, wherein the brightness enhancing layer contains a filler as the strength enhancing member.

11. The cooking device top plate according to claim 9 or 10, wherein the filler is composed of one or more selected from the group consisting of a metal, a metal oxide, ceramic, a metal salt, glass, silica, mica, talc, clay, zeolite, an organic material, and a composite thereof, and a material having at least one of a coupling material, an active group, a reactive group, an organic substance, and a metal oxide bonded, adsorbed, or deposited on the surface thereof.

12. The cooking device top plate according to any one of claims 1 to 11, wherein the substrate color improving layer is formed of the brightness enhancing layer.

13. The cooking device top plate according to any one of claims 1 to 11, wherein the substrate color improving layer includes a color tone adjusting layer provided on a lower surface of the brightness enhancing layer, the color tone adjusting layer containing a white pigment, or a white pigment and the blue pigment.

14. The cooking device top plate according to any one of claims 1 to 11 and 13, wherein the substrate color improving layer includes a color tone adjusting layer containing a white pigment, or a white pigment and the blue pigment and provided between the crystallized glass substrate and the brightness enhancing layer.

15. The cooking device top plate according to claim 14, wherein the color tone adjusting layer is also an adhesion enhancing layer.

16. The cooking device top plate according to claim 15, wherein the adhesion enhancing layer includes one or more glass thin films.

17. The cooking device top plate according to claim 15, wherein the adhesion enhancing layer is a void-containing layer having a different void ratio or/and material composition from that of the brightness enhancing layer.

18. The cooking device top plate according to any one of claims 13 to 17, wherein the color tone adjusting layer contains one or more of a reflective material and a bright material.

19. The cooking device top plate according to claim 18, wherein one or more of the reflective material and the bright material are one or more selected from the group consisting of mica, silica, metal oxide, aluminum flakes, glass particles, glass flakes, glass flakes including a vapor deposited metal layer, and mica including a metal oxide layer.

20. The cooking device top plate according to any one of claims 1 to 19, further comprising a light shielding layer provided on a lower surface of the substrate color improving layer.

21. The cooking device top plate according to claim 20, further comprising an adhesion enhancing layer as the strength enhancing member between the substrate color improving layer and the light shielding layer.

22. The cooking device top plate according to any one of claims 1 to 21,

wherein the brightness enhancing layer is
a void-containing layer containing one or more selected from the group consisting of hollow particles, a porous material, and a structure having voids between particles, or
a void-containing layer in which irregularities are formed on a lower surface of the crystallized glass substrate so that voids can be secured.

23. The cooking device top plate according to any one of claims 13 to 22,

wherein the brightness enhancing layer is
a void-containing layer in which a spacer is provided between the crystallized glass substrate and the color tone adjusting layer so that voids can be secured, or
a void-containing layer in which irregularities are formed on an upper surface of the color tone adjusting layer so that voids can be secured.

[FIG.1]

[FIG.2]

[FIG.3]

[FIG.4A]

2

11A

[FIG.4B]

2

12

11B

[FIG.5]

71

72

75

73

[FIG.6]

[FIG.7]

[FIG.8]

41

42

43

44

[FIG.9]

51

52

53

54

[FIG.10]

91B
92
95
97B
95
93

[FIG.11]

101
102
105
103
108

[FIG.12]

EP 4 397 911 A1

[FIG.13]

[FIG.14]

[FIG.15]

111A

115

5

112

113

114

[FIG.16]

111B

5

115

112

114

113

[FIG.17]

[FIG.18]

[FIG.19]

81

82

83

84

85

## INTERNATIONAL SEARCH REPORT

International application No.

**PCT/JP2022/032448**

### A. CLASSIFICATION OF SUBJECT MATTER

*F24C 15/10*(2006.01)i; *H05B 6/12*(2006.01)i
FI:   F24C15/10 B; H05B6/12 305

According to International Patent Classification (IPC) or to both national classification and IPC

### B. FIELDS SEARCHED

Minimum documentation searched (classification system followed by classification symbols)

F24C15/10; H05B6/12;C03C1/00-29/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2021-63634 A (NIPPON ELECTRIC GLASS CO., LTD.) 22 April 2021 (2021-04-22) entire text, all drawings | 1-23 |
| A | JP 2021-96025 A (NIPPON ELECTRIC GLASS CO., LTD.) 24 June 2021 (2021-06-24) entire text, all drawings | 1-23 |
| A | JP 4998016 B2 (NARUMI CHINA CORP.) 15 August 2012 (2012-08-15) entire text, all drawings | 1-23 |
| A | JP 2015-21692 A (NARUMI CHINA CORP.) 02 February 2015 (2015-02-02) entire text, all drawings | 1-23 |
| A | JP 2011-208820 A (NIPPON ELECTRIC GLASS CO., LTD.) 20 October 2011 (2011-10-20) entire text, all drawings | 1-23 |
| P, X | WO 2021/172129 A1 (PANASONIC INTELLECTUAL PROPERTY MANAGEMENT CO., LTD.) 02 September 2021 (2021-09-02) claims 1-2, 7-11, paragraphs [0022], [0046], [0047], [0058], [0100], fig. 5-15 | 1-3, 7-8, 12-13, 20, 22-23 |

☐ Further documents are listed in the continuation of Box C.   ☑ See patent family annex.

| | |
|---|---|
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **13 October 2022** | **25 October 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

| International application No. |
| --- |
| **PCT/JP2022/032448** |

| Patent document cited in search report | | | Publication date (day/month/year) | Patent family member(s) | | | Publication date (day/month/year) |
| --- | --- | --- | --- | --- | --- | --- | --- |
| JP | 2021-63634 | A | 22 April 2021 | (Family: none) | | | |
| JP | 2021-96025 | A | 24 June 2021 | (Family: none) | | | |
| JP | 4998016 | B2 | 15 August 2012 | (Family: none) | | | |
| JP | 2015-21692 | A | 02 February 2015 | (Family: none) | | | |
| JP | 2011-208820 | A | 20 October 2011 | (Family: none) | | | |
| WO | 2021/172129 | A1 | 02 September 2021 | JP | 6934628 | B2 | |
| | | | | JP | 2021-139614 | A | |
| | | | | JP | 2021-178774 | A | |

Form PCT/ISA/210 (patent family annex) (January 2015)

38

**REFERENCES CITED IN THE DESCRIPTION**

**Patent documents cited in the description**

- JP 2008016318 A
- JP 2008215651 A
- JP 2008267633 A
- JP 2011208820 A
- JP 2003168548 A
- JP 10273342 A
- JP 2008536791 A
- JP 2007530405 A
- JP 2021140187 A